(19) Europäisches Patentamt
European Patent Office
Office européen des brevets

(11) **EP 2 607 691 A1**

(12) **EUROPÄISCHE PATENTANMELDUNG**

(43) Veröffentlichungstag:
26.06.2013 Patentblatt 2013/26

(51) Int Cl.:
*F03D 9/00* [(2006.01)]  *F03D 11/02* [(2006.01)]
*F03C 2/22* [(2006.01)]  *F04B 17/02* [(2006.01)]
*F16H 39/00* [(2006.01)]

(21) Anmeldenummer: 11195239.6

(22) Anmeldetag: 22.12.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: Eisenmann, Siegfried A.
88326 Aulendorf (DE)

(72) Erfinder: Eisenmann, Siegfried A.
88326 Aulendorf (DE)

(74) Vertreter: Kaminski Harmann
Patentanwälte AG
Landstrasse 124
9490 Vaduz (LI)

(54) **Windenergieanlage mit einer Hydropumpe**

(57) Die Erfindung betrifft eine Windenergieanlage mit einem Windrotor (101), einer vom Windrotor (101) angetriebenen Hydropumpe (103), einem Hydromotor (104a, 104b), der über einen Hydraulikkreislauf (105) mit der Hydropumpe (103) gekoppelt ist, wobei das Übersetzungsverhältnis zwischen der Hydropumpe (103) und dem Hydromotor (104, 104b) durch Verändern des spezifischen Schluckvolumens der Hydropumpe (103) und/oder des Hydromotors (104a, 104b) veränderbar ist, einem Generator (107), mit welchem der Hydromotor (104a, 104b) mechanisch gekoppelt oder koppelbar ist, und einer zum Regeln des Übersetzungsverhältnisses ausgebildeten Regeleinheit (108), so dass die Drehzahl des Generators (107) bei schwankender Drehzahl des Windrotors (101) innerhalb eines Regelbereichs im Wesentlichen konstant ist. Erfindungsgemäss ist die Hydropumpe als hydrostatische Kreiskolbenmaschine (103) nach dem Orbitprinzip ausgebildet ist. In einer Weiterbildung der Erfindung ist die Hydropumpe als volumenveränderbare hydrostatische Kreiskolbenmaschine (103) nach dem Orbitprinzip ausgebildet ist, deren spezifisches Schluckvolumen veränderbar ist.

FIG. 1

**Beschreibung**

Die Erfindung betrifft eine hydrostatische Windeenergieanlage nach dem Oberbegriff des Anspruchs 1.

Eines der Hauptprobleme bei Windenergieanlagen ist die stark schwankende, im Durchschnitt niedere horizontale Komponente der Windgeschwindigkeit. Die Windenergieanlage hat aber gegenüber der Photovoltaikanlage unter anderem den Vorteil, dass im Winter die Intensität des Windangebots steigt, so dass somit das Defizit der sonnenarmen Photovoltaik ausgeglichen werden kann. Eine Windenergieanlage sollte so konzipiert sein, dass sie auch bei niedriger Windgeschwindigkeit noch eine positive Leistung an das Stromnetz liefern kann, und nicht abgeschaltet werden oder stillgesetzt werden muss.

Die von dem Windrotor angetriebene Maschine ist in der Regel ein permanent oder elektrisch erregter Generator mit einer von der Drehzahl abhängigen Frequenz. Soll beispielsweise der von dem Generator erzeugte Drehstrom in das öffentliche Stromnetz eingespeist werden, hat dessen Frequenz der Netzfrequenz zu entsprechen. Dies führt zu der Forderung, dass die Drehzahl des Generators konstant bleiben sollte. Bei einer konstanten Getriebeübersetzung zwischen der Rotorwelle und der Welle des Generators ist meist keine konstante Drehzahl des Generators möglich, da die Rotorendrehzahl bei unterschiedlicher Windintensität schwankt. Um dies auszugleichen, kommen Frequenzwandler zwischen dem Generator und dem Stromnetz zum Einsatz. Diese verursachen Kosten, sind reparaturanfällig und führen zu Leistungsverlusten aufgrund des verhältnismässig schlechten Wirkungsgrands. Aus Gründen des Gesamtwirkungsgrades sollte somit regeltechnisch dafür gesorgt werden, dass die Drehzahl des Generators selbst bei unterschiedlichen Windgeschwindigkeiten nicht zu sehr schwankt.

Ein weiteres Problem bei Windenergieanlagen mit mechanischer Getriebeverbindung zwischen dem Windrotor und dem Generator ist die Reparaturanfälligkeit und die Lebensdauer. Die verwendeten Planetengetriebe müssen in der Regel gekühlt werden und sind durch Graufleckigkeit verschleissbehaftet. Somit besteht die Forderung nach Windenergieanlagen ohne mechanische Getriebe. Die grossen radialen und axialen Kräfte der Windturbine erfordern zudem eine zusätzliche leistungsfähige Axial- und Radiallagerung der Rotorwelle.

Die Forderung nach Windenergieanlagen mit erhöhter Lebensdauer, ohne mechanischen Getrieben, und mit einem hohen Gesamtwirkungsgrad selbst bei stark schwankenden Windgeschwindigkeiten hat dazu geführt, dass auch der Einsatz von hydrostatischen Getrieben in Windenergieanlagen in Erwägung gezogen wird.

Im Stand der Technik werden unterschiedliche Konzepte für Windenergieanlagen mit hydrostatischem Triebstang beschrieben. Insbesondere aus diversen Veröffentlichungen des Instituts für fluidtechnische Antriebe und Steuerungen (IFAS) von Univ.-Prof. Dr.-Ing. H. Murrenhoff aus den Jahren 2009 und 2010 ist bekannt, eine Windenergieanlage mit einem variablen hydrostatischen Getriebe auszustatten. Mehrere von einem Windrotor angetriebene Radialkolbenpumpen mit variablem oder konstantem Schluckvolumen sind hydraulisch mit mehreren Axialkolbenmotoren verbunden, deren Schluckvolumen regelbar ist und die einen Generator antreiben. Durch Verstellen der Schluckmengen und durch Zu- und Abschalten einzelner Pumpen und Motoren ist es möglich, eine Drehzahlwandlung zwischen der vom Windrotor angetriebenen Rotorwelle und der Generatorwelle zu bewirken. Die erforderliche Drehzahlspreizung kann auf die Pumpen und die Motoren aufgeteilt werden, um die Wirkungsgrade möglichst hoch zu halten. Das Übersetzungsverhältnis kann derart gesteuert werden, dass selbst bei unterschiedlichen Windgeschwindigkeiten und Rotordrehzahlen am Generatoreingang eine konstante Drehzahl herrscht. Somit ist es möglich, als Generator einen Synchrongenerator zu verwenden, der eine im Wesentlichen konstante Eingangsdrehzahl erfordert und der ohne Einsatz eines wirkungsgradhemmenden Frequenzreglers direkt auf das Stromnetz oder an den Stromverbraucher geschaltet werden kann.

Zwar ist der Übertragungswirkungsgrad von der Windturbine zum Generator über ein Getriebe mit konstanter Übersetzung wesentlich besser als bei einer regelbaren hydrostatischen Verbindung, jedoch kann der Gesamtwirkungsgrad mittels einer variablen Übersetzung aufgrund des Einsatzbereichs bei unterschiedlichen Windverhältnissen erhöht werden.

Aus der DE 10 2009 033 272 B4 ist ein hydrostatischer Antrieb einer Windenergieanlage bekannt, bei welcher die Rotordrehzahl eines eine Hydropumpe antreibenden Rotors und die Antriebsdrehzahl eines Hydraulikmotors im Wesentlichen unabhängig voneinander regelbar sein sollen, um eine konstante Drehzahl der Antriebswelle eines Generators zu erreichen. Hierdurch werde der Einsatz eines Synchrongenerators ermöglicht. Als Hydropumpe wird eine langsamlaufende Radialkolbenpumpe mit konstantem Schluckvolumen beschrieben.

Die bei hydrostatischen Windenergieanlagen bisher zum Einsatz kommenden Hydropumpen sind für den dortigen Einsatz nur bedingt geeignet sind. Die Hydropumpe sollte langsamlaufend sein und sich durch ein hohes maximales Schluckvolumen pro Wellenumdrehung sowie durch eine Hochdrehmomentcharakteristik auszeichnen, so dass selbst bei niedrigen Rotordrehzahlen und einem Direktantrieb der Pumpe ein hohes Fördervolumen erbracht werden kann. Der Wirkungsgrad sollte möglichst hoch sein. Ausserdem sollte das Schluckvolumen pro Wellenumdrehung vorzugsweise möglichst variabel sein, insbesondere mit einer Spreizung von über 5. Da die Hydropumpe in unmittelbarer Nähe zum Windrotor in einem strömungsoptimierten Gondelgehäuse auf einem hohen Turm zum Einsatz kommt, sollte sich die Hydropumpe zudem durch einen kompakten Aufbau, einen reduzierten Durchmesser und ein geringes Gewicht auszeichnen. Die Anzahl der bewegten Teile sollte auf ein Minimum reduziert werden, um den Verschleiss der Hydropumpe gering zu halten. Ausserdem sollte die Hydropumpe den mechanischen Parallelbetrieb mehrerer Hydropumpen ohne Einsatz eines mechanischen Getriebes ermöglichen und einen kompakten Gesamtaufbau der Windenergieanlage ermöglichen. Die aus dem Stand der Technik in Zusammenhang mit hydrostatischen Triebsträngen einer Windenergieanlage bekannten Hydropumpen, insbesondere die Radialkolbenpumpen, erfüllen diese Anforderungen nicht oder nur teilweise. Gewisse aus dem Stand der Technik bekannte Hydropumpen erfüllen einen grossen Teil der genannten Anforderungen, sie gelten jedoch im Stand der Technik als nicht verstellbar. Dies ist einer der Gründe weshalb sich hydrostatische Windenergieanlagen bisher kaum durchsetzen konnten.

Aufgabe der Erfindung ist es daher, eine Windenergieanlage zur Verfügung zu stellen, welche sich durch einen hohen Gesamtwirkungsgrad, möglichst auch bei stark differierenden Windgeschwindigkeiten, einen niedrigen Verschleiss und einen verhältnismässig kompakten Aufbau auszeichnet.

Diese Aufgabe wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung beruht auf der überraschenden Erkenntnis, dass sich das in Zusammenhang mit einem nach dem Orbitprinzip arbeitenden hydrostatischen Kreiskolbenmotor bekannte Prinzip hervorragend für eine Hydropumpe einer Windenergieanlage eignet.

Eine hydrostatische Kreiskolbenmaschine nach dem Orbitprinzip ist beispielsweise aus der WO 2006/010471 als Hydromotor bekannt. Solche hydrostatische Kreiskolbenmaschinen, die als Hochmoment-Hydromotoren ausgebildet sind, eignen sich beispielsweise als Radmotoren für den hydrostatischen Antrieb von Fahrzeugen aller Art. Wegen des sehr hohen Schluckvolumens pro Umdrehung der Abtriebswelle entstehen bei gegebenem hydraulischem Eingangsdruck sehr hohe Abtriebsmomente bei gleichzeitig extrem kleinen Abmessungen und Gewichten. In dieser Hinsicht bieten diese Hochmoment-Hydromotoren grosse Vorteile. Der Einsatz als Pumpe galt bisher eben aufgrund dieser Eigenschaften als gänzlich fernliegend, da Pumpen in den meisten Einsatzbereichen unter hohen Drehzahlen betrieben werden und der im Vergleich zu einfachen Hydropumpen komplexe Aufbau einer hydrostatischen Kreiskolbenmaschine einen Einsatz als Pumpe unattraktiv erscheinen lässt. Bei hydrostatischen Kreiskolbenmaschinen dürfen Durchflussmengen und somit ihre Drehzahlen gewisse Werte nicht überschreiten, da die so genannten Atmungsorgane, d.h. die Steuerquerschnitte am als Kommutator wirkenden Drehventil, systembedingt nur sehr begrenzte Durchflussquerschnitte aufweisen. Wegen der Kavitationsgefahr sollten an diesen engsten Querschnitten im Durchflusssystem die gewisse Ölgeschwindigkeitsgrenzwerte nicht überschritten werden. Wird ein solcher Hydromotor im Kavitationsbereich betrieben, entsteht ein erheblicher Lärm und die implodierenden Kavitationsblasen führen nach kurzer Zeit zur Zerstörung der Maschine. Diese Kavitationsblasen enthalten bis zu 10% Luft im ursprünglichen Fluid und ausserdem entsteht bei diesen hohen Ölgeschwindigkeiten Öldampf durch den dort herrschenden niedrigen statischen Druck nach dem Bernoulli'schen Gesetz. In der Fachwelt ist bekannt, dass allzu hohe Unterdrücke im Ansaugbereich einer als Motor eingesetzten hydrostatischen Kreiskolbenmaschine im Schubbetrieb unbedingt zu vermeiden sind. Das Problem der Kavitationsgefahr aufgrund der engen Durchflussquerschnitte am Drehventil wirkt sich im Falle eines abbremsenden Saugbetriebs der hydrostatischen Kreiskolbenmaschine und eines Unterdrucks im Ansaugbereich viel dramatischer aus als im antreibenden Motorbetrieb.

Überraschenderweise hat sich gezeigt, dass die bisher nur als Motor bekannte hydrostatische Kreiskolbenmaschine hervorragend als Hydropumpe im hydrostatischen Triebstrang einer Windenergieanlage geeignet ist.

Bisher gelten die bekannten hydrostatischen Kreiskolbenmaschinen als nicht volumenveränderbar, was ihren Einsatzbereich beschränkt. Ein weiterer Aspekt der Erfindung besteht daher darin, die bisher generell als nicht volumenveränderbar geltende hydrostatische Kreiskolbenmaschine für den Einsatz in einer Windenergieanlage derart zu modifizieren, dass sie volumenveränderbar ist.

Die erfindungsgemässe Windenergieanlage umfasst einen Windrotor, auch Windturbine genannt, der durch einwirkende Windenergie in Rotation um eine Windrotorwelle versetzbar ist. Unterschiedliche Arten von Windrotoren, insbesondere Langsamläufer und Schnellläufer mit unterschiedlicher Anzahl an Rotorblättern, sind aus dem Stand der Technik bekannt.

Ausserdem umfasst die Windenergieanlage mindestens eine Hydropumpe, mit welcher der Windrotor derart mechanisch gekoppelt oder koppelbar ist, dass Rotationsenergie der Windrotorwelle in hydraulische Energie umwandelbar ist. Die Hydropumpe kann ein konstantes Schluckvolumen pro Pumpenwellenumdrehung haben, also nicht-volumenveränderbar sein, oder sie kann ein variables Schluckvolumen pro Pumpenwellenumdrehung haben, also volumenveränderbar oder verstellbar sein. Vorzugsweise wird die mindestens eine Hydropumpe direkt von dem Windrotor angetrieben, so dass eine 1:1-Übersetzung zwischen der Windrotorwelle und der Pumpenwelle besteht. In einer bevorzugten Ausführungsform liegen die geometrischen Achsen der Windrotorwelle und der Pumpenwelle aufeinander. Insbesondere werden die Windrotorwelle und die Pumpenwelle von einer einzigen Welle gebildet. In einer möglichen Ausführungsform der Erfindung ist die mechanische Kopplung zwischen der Windrotorwelle und der Pumpenwelle mittels einer Kupplung trennbar. Dies ist insbesondere bei Einsatz mehrerer Hydropumpen vorteilhaft.

Mindestens ein Hydromotor ist über einen Hydraulikkreislauf mit der mindestens einen Hydropumpe derart gekoppelt, dass die hydraulische Energie in Rotationsenergie einer Zweitwelle umwandelbar ist. Der Hydromotor kann ein konstantes Schluckvolumen pro Motorwellenumdrehung haben, also nicht-volumenveränderbar sein, oder er kann ein variables Schluckvolumen pro Motorwellenumdrehung haben, also volumenveränderbar oder verstellbar sein. In anderen Worten sind die Windrotorwelle und die Zweitwelle über den Hydraulikkreislauf gekoppelt, wobei ein variables Übersetzungsverhältnis zwischen den beiden Wellen besteht. Das Übersetzungsverhältnis zwischen der Windrotorwelle und der Zweitwelle ist im Falle einer volumenveränderbaren Hydropumpe durch Verändern des spezifischen Schluckvolumens der mindestens einen Hydropumpe oder im Falle eines volumenveränderbaren Hydromotors durch Verändern des spezifischen Schluckvolumens des mindestens einen Hydromotors veränderbar. Das Übersetzungsverhältnis bestimmt sich anhand des Verhältnisses der jeweiligen Schluckvolumina. Sind sowohl die Hydropumpe, als auch der Hydromotor verstellbar, kann das Übersetzungsverhältnis durch Verstellen sowohl der Hydropumpe, als auch des Hydromotors verstellt werden, wobei sich die Spreizung der verstellbaren Übersetzung entsprechend erhöht. Der Hydromotor wird insbesondere von einem verstellbaren Axialkolbenmotor gebildet, wobei das Schluckvolumen durch Verändern des Schrägstellungswinkels der Kolben und somit durch Verstellung des Hubs variabel ist.

Der mindestens eine Hydromotor ist derart mit einem Generator mechanisch gekoppelt oder koppelbar, dass die Rotationsenergie der Zweitwelle mittels des Generators in elektrische Energie umwandelbar ist. In anderen Worten treibt der mindestens eine Hydromotor den Generator an. Vorzugsweise wird der Generator direkt von dem mindestens einen Hydromotor angetrieben, so dass eine 1:1-Übersetzung zwischen der jeweiligen Motorwelle und der Zweitwelle besteht. In einer bevorzugten Ausführungsform liegen die geometrischen Achsen der jeweiligen Motorwelle und der Zweitwelle aufeinander. Insbesondere werden die Motorwelle und die Zweitwelle von einer einzigen Welle gebildet. Die Zweitwelle ist insbesondere die Generatorwelle.

Zum Regeln des Übersetzungsverhältnisses ist eine Regeleinheit vorgesehen, die mit der mindestens einen volumenveränderbaren Hydropumpe, sofern diese volumenveränderbar ist, und/oder dem mindestens einen volumenveränderbaren Hydromotor, sofern dieser volumenveränderbar ist, in derartiger Verstellverbindung steht. In anderen Worten ist die Regeleinheit zum Verstellen des Schluckvolumens des Hydromotors bzw. der Hydropumpe ausgebildet. Die Art der Regeleinheit ist vor allem abhängig von der Art der Verstellbarkeit des Hydromotors bzw. der Hydropumpe. Sind diese beispielsweise elektrisch verstellbar, besteht zwischen der Regeleinheit und dem Hydromotor bzw. der Hydropumpe vorzugsweise eine elektrische Verbindung. Die Verstellbarkeit kann jedoch auch auf andere Weise, beispielsweise hydraulisch erfolgen. Die Regeleinheit kann somit als elektronische, elektrische, hydraulische, mechanische, pneumatische oder sonstige Regeleinheit ausgebildet sein, die in Wirkverbindung mit der Volumenveränderbarkeit von Motor bzw. Pumpe steht. Die Regeleinheit ist derart ausgebildet, dass die Drehzahl des Generators bei schwankender Drehzahl des Windrotors innerhalb eines Regelbereichs im Wesentlichen konstant ist. Im Falle einer elektronischen Regeleinheit kann dies mittels Drehzahlsensoren an der Windrotorwelle und/oder an der Zweitwelle erfolgen, wobei das Übersetzungsverhältnis derart verstellt wird, dass bei schwankender Drehzahl der Windrotorwelle die Drehzahl der Zweitwelle konstant gehalten wird. Es ist jedoch auch möglich, dass die Regeleinheit von einer einfachen mechanischen Anordnung, beispielsweise einem mechanischen Regler, gebildet wird, welcher das Schluckvolumen in Abhängigkeit von der Drehzahl oder dem Hydraulikdruck verstellt.

Als Generator kommt insbesondere ein Synchrongenerator zum Einsatz, dessen Strom direkt in das öffentliche Stromnetz eingespeist wird. Auf den Einsatz eines Frequenzwandlers kann bei Konstanthalten der Generatordrehzahl somit verzichtet werden. Unter dem Begriff des Generators ist allgemein mindestens ein Energiewandler zu verstehen, der einen Teil einer Rotationsenergie mindestens einer Generatorwelle in elektrische Energie wandelt. Unter dem Generator ist auch eine Vielzahl insbesondere parallel betriebener Generatoren zu verstehen.

Eine Weiterbildung der Erfindung sieht vor, dass die Windenergieanlage sowohl mindestens eine volumenveränderbare Hydropumpe, als auch mindestens eine nicht-volumenveränderbare zweite Hydropumpe umfasst, mit welcher der Windrotor derart mechanisch gekoppelt oder koppelbar ist, dass Rotationsenergie der Windrotorwelle in hydraulische Energie umwandelbar ist. Das spezifische Schluckvolumen der mindestens einen nicht-volumenveränderbaren zweiten Hydropumpe ist konstant. Die mindestens eine nicht-volumenveränderbare zweite Hydropumpe ist über den Hydraulikkreislauf mit dem mindestens einen Hydromotor zum Antreiben desselben gekoppelt ist. Diese Kopplung ist insbesondere abhängig von der Windenergie, wobei insbesondere mittels der Regeleinheit beispielsweise bei Unter- oder Überschreiten einer bestimmten Windenstärke die hydraulische Kopplung unterbrochen bzw. hergestellt wird. In der mechanischen Kopplung zwischen dem Windrotor und der mindestens einen volumenveränderbaren Hydropumpe und/oder der mindestens einen nicht-volumenveränderbaren zweiten Hydropumpe ist in einer weiteren Ausführungsform der Erfindung eine zweite Kupplung zum mechanischen Entkoppeln der mindestens einen volumenveränderbaren hydrostatischen Kreiskolbenmaschine und/oder der mindestens einen nicht-volumenveränderbaren zweiten Hydropumpe von dem Windrotor angeordnet. Vor allem bei regelbaren, also volumenveränderbaren Hydropumpen fällt der Gesamtwirkungsgrad ab, wenn die spezifische Schluckmenge pro Wellenumdrehung vermindert wird. Eine Verbesserung des Gesamtwirkungsgrads ist somit möglich, wenn z.B. bei niedriger und mittlerer Windgeschwindigkeit die Hydropumpe in ihrem Schluckvolumen nicht reduziert wird, insbesondere eine nicht volumenveränderbare Hydropumpe eingesetzt wird, so dass diese stets mit maximalem Schluckvolumen betrieben werden kann, und die Drehzahlregelung über die in diesem Falle vorzugsweise volumenveränderbaren Hydromotoren erfolgt. Vorzugsweise ist in diesem Fall die Regeleinheit derart ausgebildet und steht mit der zweiten Kupplung in derartiger Verstellverbindung, dass die mindestens eine volumenveränderbare hydrostatische Kreiskolbenmaschine und/oder die mindestens eine nicht-volumenveränderbare zweite Hydropumpe bei Unterschreiten oder Überschreiten eines Grenzwerts der Windenergie und/oder der Rotationsenergie von dem Windrotor mechanisch entkoppelt wird, so dass der Wirkungsgrand der Windenergieanlage optimiert werden kann.

Eine Weiterbildung sieht zudem vor, dass der Windrotor verstellbare Rotorblätter und Blattverstellmittel aufweist, wobei die Regeleinheit derart ausgebildet und mit den Blattverstellmitteln in derartiger Verstellverbindung steht, dass die Drehzahl des Generators bei schwankender Windgeschwindigkeit durch Verstellen der Rotorblätter und insbesondere durch Verstellen des Übersetzungsverhältnisses innerhalb eines Regelbereichs im Wesentlichen konstant ist. Die optimale Blattstellung ergibt sich insbesondere aus der Drehzahl des Rotors bzw. der Windgeschwindigkeit.

In einer Weiterbildung der Erfindung ist der Hydraulikkreislauf, der ein offener oder geschlossener Kreislauf sein kann, als geschlossener Kreislauf ausgebildet. Im Kreislauf wird das Arbeitsfluid, insbesondere Hydrauliköl, in einem einfachen Fall von dem Ausgang der mindestens einen Hydropumpe über den Eingang und den Ausgang des mindestens einen Hydromotors und insbesondere über einen Ölkühler zum Eingang und wieder zum Ausgang der mindestens einen Hydropumpe geführt. Um externe Leckströme des mindestens einen Hydromotors und/oder der mindestens einen Hydropumpe zu kompensieren sowie einen Mindestdruck im Hydraulikkreislauf zu gewährleisten, ist im Kreislauf, insbesondere vor dem Eingang der mindestens einen Hydropumpe, eine Speisepumpe angeordnet. Mittels dieser Speisepumpe ist der geschlossene Hydraulikkreislauf mit dem Arbeitsfluid versorgbar, wobei die Schluckmenge der Speisepumpe derart dimensioniert ist, dass externe Leckströme des mindestens einen Hydromotors und/oder der mindestens einen Hydropumpe zur Vermeidung eines Unterdrucks im geschlossenen Hydraulikkreislauf kompensierbar sind. Mittels dieser Speisepumpe ist es möglich, eine Hydropumpe einzusetzen, die im bestimmungsgemässen regulären Betrieb bauartbedingt einen bestimmten Mindestdruck, insbesondere einen bestimmten Überdruck am Eingang, benötigt. Dies ist vor allem bei einer als Hydropumpe betriebenen hydrostatischen Kreiskolbenmaschine der Fall. Beispielsweise ist die Speisepumpe derart mechanisch mit der Windrotorwelle gekoppelt, dass die Speisepumpe von dem Windrotor angetrieben wird. In einer bevorzugten Variante liegt die geometrische Achse der Speisepumpenwelle auf der geometrischen Achse der Windrotorwelle und der Pumpenwelle der Hydropumpe. Insbesondere werden die Windrotorwelle, die Pumpenwelle und die Speisepumpenwelle von einer einzigen Welle gebildet. Die Speisepumpe ist beispielsweise als eine aus dem Stand der Technik bekannte Zahnringpumpe mit einer Zahnringpumpenwelle ausgebildet ist, wobei die Zahnringpumpenwelle und die Welle der mindestens einen Hydropumpe eine gemeinsame geometrische Wellenachse haben und insbesondere von einer gemeinsamen Welle gebildet werden. Alternativ ist die Speisepumpe als eine volumenveränderbare oder nicht-volumenveränderbare hydrostatische Kreiskolbenmaschine nach dem Orbitprinzip ausgebildet, wie sie im Rahmen dieser Erfindung als Hydropumpe beschrieben wird.

In einer vorteilhaften Weiterbildung der Erfindung werden mindestens zwei insbesondere eine gemeinsame Welle antreibende Hydromotoren eingesetzt. Somit wird der mindestens eine Hydromotor von mindestens einem ersten Hydromotor und mindestens einem zweiten Hydromotor gebildet, wobei in der mechanischen Kopplung zwischen dem zweiten Hydromotor und dem Generator eine erste Kupplung zum mechanischen Entkoppeln des mindestens einen zweiten Hydromotors von dem Generator angeordnet ist. Vor allem bei regelbaren, also volumenveränderbaren Hydromotoren und volumenveränderbaren Hydropumpen fällt der Gesamtwirkungsgrad bekanntlich ab, wenn die spezifische Schluckmenge pro Wellenumdrehung vermindert wird. Eine Verbesserung des Gesamtwirkungsgrads ist somit möglich, wenn z.B. bei niedriger und mittlerer Windgeschwindigkeit die Hydropumpe in ihrem Schluckvolumen nicht reduziert wird, insbesondere eine nicht regelbare Hydropumpe eingesetzt wird, so dass sie stets mit maximalem Schluckvolumen betrieben werden kann, und die Drehzahlregelung über die Volumenverstellung der Hydromotoren erfolgt. Durch den oben beschriebenen Einsatz mindestens zweier Hydromotoren ist es möglich, dass der vom Generator entkoppelbare mindestens eine zweite Hydromotor, der im Falle einer geringen Leistung nicht benötigt wird, entweder auf Umlauf geschaltet wird, oder mittels der ersten Kupplung, insbesondere einer Lamellenkupplung, vom Generator mechanisch getrennt wird. Somit arbeitet das System in diesem Teillastbereich mit optimalem Wirkungsgrad. Die Regeleinheit ist in diesem Falle insbesondere derart ausgebildet und steht mit der ersten Kupplung in derartiger Verstellverbindung, dass der zweite Hydromotor bei Unterschreiten eines Grenzwerts der Windenergie, der hydraulischen Energie und/oder der Rotationsenergie von dem Generator mechanisch entkoppelt wird. Durch diese Abschaltbarkeit eines der Hydromotoren wäre es unter Umständen auch möglich, auf eine Regelbarkeit der Hydropumpe ganz zu verzichten und die Drehzahlregelung lediglich durch die volumenveränderbaren Hydromotoren vorzunehmen. Zusammen mit der Verbesserung des Gesamtwirkungsgrands wäre damit auch eine Kostenreduzierung bei der Windenergieanlage möglich.

Zumindest wenn keine der angetriebenen Hydropumpen eine Volumenveränderbarkeit vorsieht, ist vorzugsweise mindestens ein Hydromotor als regelbarer, also volumenveränderbarer Hydromotor ausgebildet. Als regelbarer Hydromotor wird insbesondere ein volumenveränderbarer Axialkolbenmotor der Schrägachsenbauart, wie insbesondere von der Firma Rexroth angeboten, eingesetzt. Das spezifische Schluckvolumen des mindestens einen regelbaren Hydromotors pro Umdrehung der Motorwelle ist somit veränderbar. Durch diese Veränderung des Schluckvolumens kann auch das Übersetzungsverhältnis zwischen der Windrotorwelle und der Zweitwelle verändert werden. Insbesondere ist die Regeleinheit derart ausgebildet und steht mit dem mindestens einen regelbaren Hydromotor in derartiger Verstellverbindung, dass durch Verstellen des mindestens einen regelbaren Hydromotors die Drehzahl des Generators bei schwankender Drehzahl des Windrotors innerhalb eines Regelbereichs im Wesentlichen konstant ist. Kommen mehrere Hydromotoren zum Einsatz, können alle Hydromotoren oder auch nur ein Teil dieser Hydromotoren volumenveränderbar sein. Im Falle einer volumenveränderbaren Hydropumpe kann auf die Volumenänderbarkeit des Hydromotors oder der Hydromotoren gegebenenfalls auch gänzlich verzichtet werden. Ein wesentlicher Vorteil des Einsatzes sowohl einer volumenveränderbaren Hydropumpe als auch eines volumenveränderbaren Hydromotors besteht darin, dass die Spreizung der Übersetzung entsprechend erhöht werden kann. Zudem lässt sich durch leistungsabhängiges Zu- und Abkoppeln zusätzlicher Hydropumpen und Hydromotoren der Gesamtwirkungsgrad steigern.

Wenn in Zusammenhang mit der Erfindung mehrfach von einer Regeleinheit die Rede ist, so kann es sich hierbei um eine einzige Regeleinheit handeln, beispielsweise eine elektronische Mikroprozessor-Regeleinheit, welche mittels elektrischer, elektrohydraulischer, elektromechanischer und/oder elektropneumatischer Aktoren und/oder Sensoren die jeweilige Ansteuerung der Pumpen bzw. Motoren bzw. Kupplungen in Abhängigkeit unterschiedlicher Eingangsgrössen übernimmt. Es ist jedoch auch möglich, dass es sich um mehrere unabhängig arbeitende Regeleinheiten unterschiedlicher Gattung, beispielsweise eine elektronische und eine mechanische Regeleinheit handeln. Unter dem Begriff der Regeleinheit ist somit abstrakt Mittel zur Regelung und/oder Steuerung zu verstehen, unabhängig davon, ob diese abhängig oder unabhängig arbeiten oder von einer Einheit oder mehreren Untereinheiten gebildet wird.

Wie bereits oben erwähnt umfasst die Erfindung insbesondere, dass die mindestens eine Hydropumpe als mindestens eine hydrostatische Kreiskolbenmaschine nach dem Orbitprinzip ausgebildet ist.

Im Folgenden wird zunächst auf den bereits im Wesentlichen aus dem Stand der Technik bekannten allgemeinen Grundaufbau einer hydrostatischen Kreiskolbenmaschine eingegangen, wie er insbesondere auch in der WO 2006/010471 beschrieben wird.

Die hydrostatische Kreiskolbenmaschine umfasst einen Leistungsteil, der im Gehäuse der Kreiskolbenmaschine angeordnet ist. Der Leistungsteil setzt sich im Wesentlichen aus einem feststehenden, zentrischen Stator, einem beweglichen Kreiskolben und einer zentrisch drehbar gelagerten Welle zusammen.

Der Stator hat eine Stator-Innenverzahnung mit der Zähnezahl d. Der Kreiskolben besitzt eine teilweise in die Stator-Innenverzahnung des Stators eingreifende Kreiskolben-Aussenverzahnung mit einer Zähnezahl c und eine Kreiskolben-Innenverzahnung mit einer Zähnezahl b. Der Kreiskolben hat einen Kreiskolben-Aussendurchmesser. Die Welle kämmt mit ihrer ersten Wellen-Aussenverzahnung mit einer Zähnezahl a teilweise die Kreiskolben-Innenverzahnung des Kreiskolbens, wobei der Kreiskolben zum Ausführen einer Orbitbewegung derart exzentrisch zur Wellenachse angeordnet und dimensioniert ist und die Zähnezahlen a, b, c, d in einem derartigen Verhältnis zueinander stehen, dass sich mit Arbeitsfluid ver- und entsorgbare Zahnkammern zwischen der Stator-Innenverzahnung des Stators und der Kreiskolben-Aussenverzahnung des Kreiskolbens bilden. In einer bevorzugten Weiterbildung der Erfindung wird die Stator-Innenverzahnung von kreiszylindrischen Rollen gebildet.

Ein Ein- und Auslassteil dient zur Ver- und Entsorgung des Leistungsteils mit dem Arbeitsfluid, wobei das Arbeitsfluid mit einem Arbeits- bzw. Saugdruck über einen Druckanschluss, der als Eingang dient, der Kreiskolbenmaschine zugeführt werden kann.

Mittels eines insbesondere scheibenförmigen Drehventils, das vorzugsweise zur Welle und zum Stator zentrisch laufend gelagert ist, erfolgt die Steuerung der Ver- und Entsorgung der Zahnkammern mit dem Arbeitsfluid. In anderen Worten ist das Drehventil drehbar um die zentrische, sich längs mittig der Welle erstreckenden geometrischen Wellenachse gelagert. Mittels des Drehventils ist über im Wesentlichen radial im Drehventil angeordnete Druckfenster die Ver- und Entsorgung der Zahnkammern mit dem Arbeitsfluid durch Rotation des Drehventils derart kommutierend steuerbar, dass das Arbeitsfluid von einem Eingang der Kreiskolbenmaschine in einen ersten Teil der Zahnkammern hinein und aus einem zweiten Teil der Zahnkammern zu einem Ausgang der Kreiskolbenmaschine heraus geleitet wird, so dass durch die Rotation der Welle und die Orbitbewegung des Kreiskolbens das Arbeitsfluid vom ersten Teil der Zahnkammern in den zweiten Teil der Zahnkammer verdrängt wird. Somit wird durch die Rotationsenergie der Welle ein Ölflusses mit einer hydraulischen Energie erzeugt, der aus der Kreiskolbenmaschine über einen Ausgang heraus geleitet wird, wobei der herausgeleitete Ölfluss über den Hydraulikkreislauf dem mindestens einen Hydromotor zugeführt ist.

Das Drehventil hat einen bestimmten Drehventil-Aussendurchmesser, der entweder durch den tatsächlichen Aussendurchmesser des Drehventils oder durch den äusseren oder mittleren Durchmesser der im scheibenförmigen Druckventil radial angeordneten Druckfester bestimmt wird.

Alternativ besteht die Möglichkeit, anstelle eines zentrisch gelagerten Drehventils ein exzentrisch um die Wellenachse drehbares Drehventil einzusetzen, welches eine Orbitbewegung um die Wellenachse durchführt, die insbesondere der Bewegung des Kreiskolbens entspricht, wie aus dem Stand der Technik bekannt.

Die Welle wird von beidseitig am Leistungsteil - insbesondere unmittelbar benachbart angeordneten - Radiallagern, insbesondere Wälzlagern, insbesondere Kegelrollenlagern, gelagert. Aufgrund des genannten Aufbaus der hydrostatischen Kreiskolbenmaschine kann eine durchgehende Welle mit grossen Wellendurchmessern und hoher Torsionsfestigkeit eingesetzt werden. Somit ist es möglich, beide Wellenenden einem hohen Drehmomentfluss auszusetzen und an dem einen Wellenende den Windrotor und an dem anderen Wellenende mindestens eine zweite Hydropumpe, insbesondere eine zweite hydrostatische Kreiskolbenmaschine, mindestens eine Speisepumpe und/oder mechanische Kupplungen anzuordnen. Erfindungsgemäss ist es somit möglich, in einer Weiterbildung der die Windrotorwelle und die Welle der mindestens einen hydrostatischen Kreiskolbenmaschine als eine gemeinsame Welle auszubilden. Diese gemeinsame Welle ist in den Radiallagern der hydrostatischen Kreiskolbenmaschine gelagert. Hierzu werden vorzugsweise Kegelrollenlager oder Schräglager in O-Anordnung, welche nahe dem Leistungsteil angeordnet sind, verwendet. Mittels dieser Radiallager ist die gemeinsame Welle zentrisch um die geometrische Wellenachse drehbar radial und insbesondere auch axial gelagert. Es ist möglich, weitere Zusatzlager, insbesondere am Wellenende des Windrotors, vorzusehen.

Es bestehen unterschiedliche Möglichkeiten, das Drehventil mit der erforderlichen Drehzahl, abhängig vom Übersetzungsverhältnis zwischen der Welle und dem Kreiskolben, anzutreiben. Besteht zwischen der Welle und dem Kreiskolben ein Übersetzungsverhältnis von 1:1, so kann das Drehventil direkt von der Welle ohne Drehzahlanpassung angetrieben werden.

Ist das Übersetzungsverhältnis zwischen der Welle, also der Wellen-Aussenverzahnung, und dem Kreiskolben, also der Kreiskolben-Innenverzahnung, nicht 1:1, so ist eine Bewegungsanpassung des Drehventils erforderlich. Eine Möglichkeit besteht darin, das Drehventil ebenfalls mittels einer Orbitbewegung anzutreiben, wie im Stand der Technik bekannt. Alternativ und bevorzugt ist im Falle einer nicht 1:1-Übersetzung von Welle und Kreiskolben zwischen der Welle und dem Drehventil ein Getriebe zum Antreiben des Drehventils mit geeigneter Drehzahl angeordnet.

Zu dieser allfällig erforderlichen Drehzahlanpassung umfasst die Kreiskolbenmaschine in einer möglichen Ausführungsform ein Zahnradgetriebe in Form eines insbesondere als Taumelgetriebe ausgebildeten Exzentergetriebes, das zwischen einer zweiten Wellenaussenverzahnung der Welle mit einer Zähnezahl w und einer Innenverzahnung eines feststehenden Innenzahnkranzes mit einer Zähnezahl z als Synchronantrieb für das Drehventil angeordnet ist. Vorzugsweise ist das Exzentergetriebe, insbesondere das Taumelgetriebe, ausschliesslich im Leckölbereich der hydrostatischen Kreiskolbenmaschine, also im nicht Arbeitsdruck führenden Bereich der Kreiskolbenmaschine, der auch mit dem Ausgang verbunden ist, angeordnet. Alternativ ist das Zahnradgetriebe als ein Planetengetriebe mit mindestens einem Planetenträger, der mit dem Drehventil drehfest verbunden ist und auf welchem Planetenräder zwischen der Wellenaussenverzahnung und dem feststehenden Innenzahnkranz angeordnet sind, ausgebildet, wie ebenfalls aus der WO 2006/010471 bekannt. Führt das Drehventil selbst keine Orbitbewegung durch, sondern rotiert es um die Wellenachse, entsteht somit aufgrund der Unterbringung des Zahnradgetriebes im Leckölraum der Kreiskolbenmaschine und durch die Verwendung kostengünstiger Fliesspress- oder Sinterteile als Getriebeglieder eine kompakte und preisgünstige Konstruktion.

Dieses als Synchronantrieb für das Drehventil dienende, insbesondere als Taumelgetriebe ausgebildete Exzentergetriebe weist einen Exzenter auf, der eine Exzenter-Innenverzahnung mit einer Zähnezahl x und eine Exzenter-Aussenverzahnung mit einer Zähnezahl y hat. Die Exzenter-Innenverzahnung kämmt teilweise mit einer zweiten Wellenaussenverzahnung der Welle mit einer Zähnezahl w. Die Exzenter-Aussenverzahnung kämmt teilweise mit einem feststehenden Innenzahnkranz mit einer Zähnezahl z. Das Verhältnis der Zähnezahlen w, x, y, z ist derart bemessen, dass der Exzenter exzentrisch zur Wellenachse zwischen der Welle und dem Innenzahnkranz bei Drehung der Welle eine Orbitbewegung ausführt. Ein topfförmiges Verbindungsteil ist mit dem exzentrisch drehbaren Exzenter drehfest gekoppelt und mit dem zentrisch drehbaren Drehventil, insbesondere im Übersetzungsverhältnis 1:1, drehfest über eine insbesondere taumelnde oder exzentrische Verbindung derart verbunden ist, dass eine Drehbewegung von der Welle über den Exzenter auf das Drehventil übertragbar ist.

Sind jeweils gleichartige Verzahnungen in Eingriff, so ist die Zähnezahl a kleiner als die Zähnezahl b, die Zähnezahl c kleiner als die Zähnezahl d, die Zähnezahl w kleiner als die Zähnezahl x und die Zähnezahl y kleiner als die Zähnezahl z, wobei die jeweilige Zahndifferenz vorzugsweise ein oder zwei Zähne beträgt.

Insbesondere folgende, aus dem Stand der Technik bekannte Gleichung stellt das Drehzahlverhältnis Welle zum Kreiskolben bzw. Welle zum Drehventil dar:

$$\frac{\frac{b}{a} \cdot d - c}{d - c} = \frac{\frac{x}{w} \cdot z - y}{z - y}$$

Wie aus dieser Gleichung erkennbar, können die Zähnezahlen des insbesondere als Taumelgetriebes ausgebildeten Exzentergetriebes durchaus unterschiedlich ausgeführt werden.

Im Folgenden wird zur Vereinfachung teilweise lediglich der Begriff des Taumelgetriebes verwendet, worunter allgemein auch ein Exzentergetriebe zu verstehen ist.

Eine erste Option ist beispielsweise die Auslegung exakt wie beim Leistungsteil, insbesondere mit w=12, x=14, y=11 und z=12. Es sollte dabei lediglich beachtet werden, dass die Exzentrizität der beiden Innengetriebe exakt gleich sind. Der Gleichungsausdruck ist eine positive ganze Zahl, bevorzugt gleich 3. Ferner muss angestrebt werden, dass in diesem Bereich der Durchmesser der Welle ausreichend gross ist, damit ihre Torsionsfestigkeit für das maximale Drehmoment noch ausreicht. Hierbei wird aber die Exzentrizität des Taumelgetriebes verhältnismässig gross, so dass der Taumelwinkel entsprechend gross wird. Allerdings ist dann die Drehzahl der Exzentrizität verhältnismässig klein.

Das Verhältnis zwischen der Drehzahl Ne der Exzentrizität des Taumelgetriebes und der Drehzahl Nw der Welle ergibt sich aus der Gleichung

$$\frac{Ne}{Nw} = -\frac{w \cdot y}{x \cdot z - w \cdot y},$$

wobei dieses Verhältnis bevorzugt zwischen -3 und -9 liegt.

Eine zweite Option sind die bevorzugten Auslegungen der Zähnezahlen nach a=12, b=14, c=11, d=12, w=12, x=13, y=23 und z=24 oder nach a=12, b=14, c=11, d=12, w=9, x=10, y=17 und z=18 mit jeweils einer sehr kleinen Exzentrizität. Wie aus der obigen Gleichung Ne/Nw erkennbar, erhöht sich die Drehzahl der Exzentrizität in diesem Falle.

Bei der Auslegung des Taumelgetriebes mit den Zähnezahlen a=12, b=14, c=11, d=12, w=12, x=13, y=23 und z=24 ergeben sich bekannte Vorteile: Da bei der Montage des Motors die Drehstellung des Drehventils stets exakt zur Drehstellung des Motors beim Leistungsteil in der Phasenlage passen muss, ist es sinnvoll, dass die Zähnezahl w und deren Drehstellung auf der Welle genau gleich ist wie die Zähnezahl a der Aussenverzahnung auf der Welle am Leistungsteil und deren Drehstellung. So kann die Welle stets montiert werden, ohne darauf achten zu müssen, in welcher Drehstellung sie sich befindet, wodurch die Montage erheblich vereinfacht wird.

Die vorgeschlagene Zähnezahlen a=12, b=14, c=11, d=12, w=9, x=10, y=17 und z=18 haben bezüglich der Verzahnung für das Taumelgetriebe den Vorteil, dass der Verzahnungsmodul grösser wird, die Stabilität der Welle in diesem Bereich wächst und insbesondere die negativ laufende Drehzahl der Exzenterachse der Exzenterscheibe stark abfällt, was zu einem ruhigeren Lauf des Getriebes führt. Man nimmt dabei in Kauf, dass der Taumelwinkel etwas grösser wird, und verzichtet dabei auch auf den oben beschriebenen Vorteil bei der Montage.

Anstelle des oben beschriebenen Taumelgetriebes kann jedoch auch ein klassisches Exzentergetriebe, dessen Exzenter keine Taumelbewegung durchführt, sondern sich parallel zur Wellenachse dreht, eingesetzt werden. In diesem Fall besteht eine exzentrische Verbindung mit einer Zähnezahldifferenz sowohl zwischen der Exzenter-Innenverzahnung und der Wellenaussenverzahnung, also auch zwischen der Exzenter-Aussenverzahnung und dem feststehenden Innenzahnkranz, wie auch zwischen einer zweiten Exzenter-Aussenverzahnung und einem Innenzahnkranz des Drehventils.

Wie bereits oben erwähnt besteht jedoch auch die Möglichkeit, auf das Zahnradgetriebe zu verzichten und das Drehventil 1:1 drehfest mit der Welle zu koppeln, insbesondere bei Einsatz einer 1:1-Übersetzung zwischen der Wellen und dem Kreiskolben.

In einer vorteilhaften Ausführungsform wird die Stator-Innenverzahnung durch kreiszylindrische Rollen gebildet, was zu weiter erhöhter Druckleistung und exzellenter Lebensdauer führt. Messungen haben gezeigt, dass durch den Übergang zu Rollen im Stator der Anfahrwirkungsgrad und auch der mechanisch-hydraulische Wirkungsgrad erheblich gesteigert werden kann.

Um das scheibenförmige Drehventil axial gegen Leckage des Arbeitsfluids abzudichten und es mit seinen Druckfenstern mit ausreichendem Druck gegen die Steuerplatte mit ihren Fenstern, die über Kanäle zu den Zahnkammern führen, zu drücken, ist vorzugsweise ein drehfester axialer zweiter Ausgleichskolben vorgesehen, der axial auf das Drehventil wirkt. Der axiale zweite Ausgleichskolben ist beispielsweise rings um das Taumelgetriebe angeordnet. Insbesondere ist der feststehende Innenzahnkranz in dem axialen zweiten Ausgleichskolben ausgeformt. Die Kraft auf das Drehventil wird beispielsweise mittels einer Tellerfeder aufgebracht.

Bei der Verwendung einer solchen hydrostatischen Kreiskolbenmaschine als Hydropumpe einer Windenergieanlage benötigt das rotorseitige Radiallager eine höhere radiale Tragzahl zur zusätzlichen Aufnahme der Rotorlast. Vorzugsweise sollte es möglichst nahe der Mitte des Rotors angeordnet sein. Es ist vorteilhaft, wenn dieses Lager möglichst nahe am Rotor liegt und gegebenenfalls ausserhalb des Leckraums der Kreiskolbenmaschine mit einer Wälzlagerfett-Dauerfüllung direkt im Gehäuseteil der Kreiskolbenmaschine angeordnet ist. Die beschriebene Kreiskolbenmaschine eignet sich aufgrund der vorteilhaften Lageranordnung und der leistungsstarken, gegebenenfalls durchgehenden Welle somit hervorragend als direkt vom Rotor angetriebene Hydropumpe einer Windenergieanlage. In diesem Fall ist die Welle bevorzugt einstückig mit einem Rotorflansch ausgebildet, an welchem unmittelbar der Rotor zum Direktantrieb montierbar ist.

Gemäss einer Weiterbildung der Erfindung wird diese Merkmalskombination einer nicht-volumenveränderbaren hydrostatischen Kreiskolbenmaschine wie folgt weitergebildet.

Der Kreiskolben ist relativ zum feststehenden Stator und relativ zur axial feststehenden Welle parallel zur Wellenachse axial verschiebbar. Hierzu erstrecken sich die erste Wellen-Aussenverzahnung der Welle und die Stator-Innenverzahnung des Stators derart axial, dass die Kreiskolben-Innenverzahnung auf der erste Wellen-Aussenverzahnung und die Kreiskolben-Aussenverzahnung auf der Stator-Innenverzahnung axial verschoben werden können.

Um den Kreiskolben axial verschieben zu können, weist die Kreiskolbenmaschine Verstellorgane auf, die mit dem Kreiskolben axial zur dessen axialer Verstellung in Eingriff stehen. Unter Verstellorganen sind allgemein Mittel zum axialen Verschieben des Kreiskolbens zu verstehen, insbesondere hydraulische, mechanische, pneumatische oder elektrische Antriebe, die innerhalb oder ausserhalb des Gehäuses der Kreiskolbenmaschinen angeordnet sein können. Insbesondere sind die Verstellorgane zwischen dem Kreiskolben und den Wälzlagern links und rechts axial verschieblich. Mittels des axialen Verschiebens des Kreiskolbens wird die axiale Längserstreckung der Zahnkammern und somit das Volumen der Zahnkammern stufenlos verstellt. Hierzu ist eine sich radial erstreckende erste Wand der Zahnkammern axial feststehend und mit dem Gehäuse axial gekoppelt. Hingegen ist eine sich radial erstreckende zweite Wand der Zahnkammern gemeinsam mit dem Kreiskolben axial verschiebbar und mit dem Kreiskolben axial gekoppelt. Die zweite Wand liegt der ersten Wand parallel beabstandet gegenüberliegt, wobei die Zahnkammern zwischen der ersten und zweiten Wand angeordnet sind und sich dort axial erstrecken.

Die erste Wand wird von einer so genannten Kreiskolbenplatte und die zweite Wand von einer so genannten Statorplatte gebildet. Die Kreiskolbenplatte und die Statorplatte dichten die Zahnkammern axial ab. Das bedeutet, dass sowohl zwischen der Statorplatte und der Stator-Innenverzahnung sowie der Kreiskolben-Aussenverzahnung, als auch zwischen der Kreiskolbenplatte und der Stator-Innenverzahnung sowie der Kreiskolben-Aussenverzahnung ein dichter Kontakt besteht. Somit werden die Zahnkammern von der Statorplatte, der Kreiskolbenplatte, der Stator-Innenverzahnung und der Kreiskolben-Aussenverzahnung begrenzt.

Die Kreiskolbenplatte ist axial feststehend und radial mit dem Kreiskolben gekoppelt, so dass sie die Orbitalbewegung des Kreiskolbens ebenfalls ausführt. Die radial mit dem Kreiskolben gekoppelte Kreiskolbenplatte weist im Gehäuse eine der Orbitalbewegung der Kreiskolbenplatte entsprechende freie Beweglichkeit in radialer Richtung und in Umfangsrichtung auf.

Die Statorplatte ist hingegen axial beweglich und axial mit dem Kreiskolben gekoppelt, jedoch radial vom Kreiskolben entkoppelt, so dass sie also keine Orbitalbewegung und auch keine Drehbewegung durchführt, sondern drehfest ist.

Das Volumen der Zahnkammern ist durch das axiale Verschieben des Kreiskolbens und somit auch der Statorplatte mittels der Verstellorgane stufenlos veränderbar, indem der Abstand zwischen der axial verschiebbaren Statorplatte und der axial feststehenden Kreiskolbenplatte verkleinert und vergrössert werden kann.

Vorzugsweise greift die axial feststehende Kreiskolbenplatte mit ihrer Kreiskolbenplatten-Innenverzahnung in die Kreiskolben-Aussenverzahnung, welche beide die Zähnezahl c aufweisen und gleichartige Verzahnungsgeometrien haben, derart auf in axialer Richtung dichtende Weise passgenau ein, dass der Kreiskolben relativ zur axial feststehenden Kreiskolbenplatte axial verschiebbar ist. Aufgrund der Passgenauigkeit der Kreiskolbenplatten-Innenverzahnung mit der Kreiskolben-Aussenverzahnung stehen beide in axial dichtendem, aber axial beweglichem Kontakt.

In einer Ausführungsform der Erfindung ist die Kreiskolbenplatte im Gehäuse derart radial dichtend geführt ist, dass die Kreiskolbenplatte bei ihrer Orbitbewegung die Zahnkammern nach aussen abdichtet. Dies erfolgt beispielsweise dadurch, dass die Kreiskolbenplatte in einer scheibenartigen Ausnehmung im Gehäuse, insbesondere zwischen einem ersten Gehäuseteil und einem zweiten Gehäuseteil des Gehäuses, radialbeweglich und radial dichtend gelagert ist. Die radiale Abdichtung erfolgt insbesondere mittels einer an den Stator angrenzenden, sich radial nach aussen erstreckenden, in axiale Richtung weisenden Wand, auf welcher eine ebenfalls radial erstreckende, in axiale Richtung weisende Wand der Kreiskolbenplatte, welche die Orbitbewegung ausführt, gleitet.

Die axial bewegliche Statorplatte greift vorzugsweise mit ihrer Statorplatten-Aussenverzahnung in die Stator-Innenverzahnung auf in axialer Richtung dichtende Weise passgenau ein. Hierzu haben die Statorplatten-Aussenverzahnung und die Stator-Innenverzahnung die gleiche Zähnezahl d und im Wesentlichen die gleiche Verzahnungsgeometrie. Somit ist die Statorplatte relativ zum axial feststehenden Stator gemeinsam mit dem Kreiskolben axial verschiebbar. Aufgrund der Passgenauigkeit der Statorplatten-Aussenverzahnung mit der Stator-Innenverzahnung stehen beide in axial dichtendem, aber axial beweglichem Kontakt.

In einer Weiterbildung der Erfindung ist ein Ausgleichskolben mit der Statorplatte axial gekoppelt. Es ist möglich, die Statorplatte und den Ausgleichskolben einstückig auszubilden. Der Ausgleichskolben greift in einen axialen Ausgleichszylinder ein. Der Ausgleichskolben ist in dem feststehenden Gehäuse angeordnet und mit dem Arbeitsdruck des Arbeitsfluids der Zahnkammern beaufschlagbar, indem eine direkte oder indirekte Verbindung zwischen dem Ausgleichszylinder und dem Druckanschluss besteht. Die Druckbeaufschlagung erfolgt derart, dass der Arbeitsdruck in dem Ausgleichszylinder über die Statorplatte dem Arbeitsdruck in den Zahnkammern zumindest teilweise entgegenwirkt und somit eine Kraft auf den Kreiskolben in Richtung einer Ausgangsstellung mit einem reduzierten Volumen der Zahnkammern wirkt. Somit wirkt auf der einen Seite der axial verschiebbaren Statorplatte eine erste Kraft, die aus dem Arbeitsdruck in dem ersten Teil der Zahnkammern resultiert, und auf der gegenüberliegenden anderen Seite der Statorplatte eine zweite Kraft, die aus dem Arbeitsdruck in dem Ausgleichszylinder resultiert, ausgeübt. Diese beiden Kräfte wirken einander entgegen und kompensieren sich teilweise, so dass die axiale Halte- und Verstellkraft des Kreiskolbens reduziert wird.

Um diese Kräftekompensation zu unterstützen und/oder eine Ausgangsstellung des Kreiskolbens im drucklosen Zustand der Kreiskolbenmaschine zu erzwingen, sieht eine Weiterbildung zwischen dem Ausgleichskolben und dem Ausgleichszylinder wirkende Regelfedern vor, die den Ausgleichskolben axial gegen den Kreiskolben und somit den Kreiskolben in Richtung einer Ausgangsstellung mit einem reduziertem Volumen der Zahnkammern drücken. Die Regelfedern wirken also in die gleiche Richtung wie der Arbeitsdruck in dem Ausgleichszylinder.

Der Ausgleichskolben und der Ausgleichzylinder haben beispielsweise eine Ringform und erstrecken sich insbesondere rings um die Welle. Vorzugsweise sind sie zwischen dem Leistungsteil und dem Taumelgetriebe angeordnet. Erfindungsgemäss können Ausgleichskolben und Ausgleichzylinder vertauscht werden. Unter einem Ausgleichskolben ist somit erfindungsgemäss auch ein Ausgleichzylinder zu verstehen, und umgekehrt.

Die Erfindung sieht in einer Weiterbildung der Erfindung vor, dass die Verstellorgane als ein Regelkolben ausgebildet sind, der mit dem Kreiskolben axial in Eingriff steht. In anderen Worten ist der Regelkolben mit dem Kreiskolben derart axial gekoppelt, dass der Kreiskolben mittels des Regelkolbens axial verschiebbar ist. Der Regelkolben greift in einen im feststehenden Gehäuse angeordneten axialen Regelzylinder derart ein, dass eine Kraft auf den Kreiskolben zum axialen Verschieben des Kreiskolbens und zum Ändern des Volumens der Zahnkammern ausübbar ist. Hierzu ist der Regelzylinder mit einem Steuerdruck beaufschlagbar. Vorzugsweise sind der Regelzylinder und der Regelkolben derart angeordnet, dass der Kreiskolben durch die Druckbeaufschlagung im Regelzylinder in eine derartige Richtung verschoben wird, dass sich das Volumen der Zahnkammern bei zunehmendem Steuerdruck vergrössert. In anderen Worten bewirkt ein zunehmender Steuerdruck eine Zunahme des Volumens der Zahnkammern.

Der Regelkolben und der Regelzylinder können ringförmig zentrisch um einen Abtriebsabschnitt der Welle im Gehäuse angeordnet sein, wobei der Abtriebsabschnitt demjenigen Abschnitt der Welle, an welchem das Taumelgetriebe angeordnet ist, gegenüberliegt.

Um die axiale Kraft von dem Regelkolben auf den Kreiszylinder übertragen zu können, ist zwischen dem Regelkolben und dem Kreiskolben beispielsweise eine sich radial erstreckende Zwischenscheibe angeordnet. Der Kreiskolben gleitet bei Ausführung seiner Orbitalbewegung mit seiner in axiale Richtung weisenden Stirnfläche auf einer in entgegengesetzt axiale Richtung weisenden Fläche der Zwischenscheibe.

Der Regelkolben ist beispielsweise derart angeordnet, dass er insbesondere über diese Zwischenscheibe den Kreiskolben gegen den gegenüberliegenden Ausgleichskolben und insbesondere auch gegen die Regelfedern drückt. In anderen Worten wirkt der Arbeitsdruck in dem Ausgleichskolben dem Steuerdruck in dem Regelkolben kinematisch entgegen.

Der Steuerdruck in dem Regelzylinder kann in einer möglichen Variante der Erfindung durch den Arbeitsdruck des Arbeitsfluids erzeugt werden. Hierzu besteht insbesondere eine derartige direkte oder indirekte Verbindung zwischen dem Druckanschluss und dem Regelzylinder, dass der Regelkolben mit dem Arbeitsdruck des Arbeitsfluids beaufschlagbar ist. In diesem Fall ist der Steuerdruck gleich dem Arbeitsdruck. Die wirksamen Flächen des Regelzylinders, des Regelkolbens, der Statorplatte, der Kreiskolbenplatte und gegebenenfalls des Ausgleichszylinders und des Ausgleichskolbens sind hierbei vorzugsweise derart dimensioniert, dass der Regelzylinder bei Anstieg des Drehmoments an der abtreibenden Welle und somit bei Anstieg des Arbeitsdrucks den Kreiskolben in Richtung eines vergrösserten Volumens der Zahnkammern drückt. Umgekehrt wird bei Rückgang des Drehmoments und Abfall des Arbeitsdrucks eine Verminderung des Volumens der Zahnkammern bewirkt. Somit nimmt das Schluckvolumen bei steigendem Drehmoment zu und bei fallendem Drehmoment ab. Hierdurch ist es möglich, hohe Drehzahlen bei einem verhältnismässig geringen Abtriebsmoment, geringem Schluckvolumen und verhältnismässig geringem Arbeitsfluid-Durchsatz zu erzielen, beispielsweise bei hoher Windgeschwindigkeit, wohingegen bei geringerer Drehzahl ein hohes Drehmoment bei grossem Schluckvolumen zur Verfügung steht, beispielsweise bei niedriger Windgeschwindigkeit.

Vorzugsweise ist die Kreiskolbenmaschine mit einem Steuerdruckanschluss ausgestattet, der mit dem Regelzylinder derart verbunden ist, dass ein Steuerdruck aus dem Steuerdruckanschluss auf den Regelkolben wirkt. Somit kann das Volumen der Kreiskolbenmaschine durch Verändern des Steuerdrucks variiert werden. In einer Weiterbildung der Erfindung ist der Regelkolben wahlweise insbesondere mittels eines Ventils entweder mit dem Arbeitsdruck des Arbeitsfluids oder mit einem Steuerdruck aus dem Steuerdruckanschluss beaufschlagbar.

Der Steuerdruckanschluss wird insbesondere von der Regeleinheit zum Verstellen des Schluckvolumens der hydrostatischen Kreiskolbenmaschine angesteuert.

Um wegen der Kavitationsgefahr einen gewissen Mindestdruck im Ansaugbereich der hydrostatischen Kreiskolbenmaschine zu gewährleisten, ist es mittels der erfindungsgemässen Kreiskolbenmaschine möglich, den Unterdruck durch Variieren des Schluckvolumens der Zahnkammern wie oben beschrieben derart einzustellen, dass eine Grenzunterdruck nicht unterschritten wird. Ausserdem sieht die Erfindung in einer Weiterbildung vor, dass die oben genannte - insbesondere ebenfalls volumenveränderbare - Speisepumpe diesen Mindestdruck gewährleistet.

Zur Reduzierung der genannten Kavitationsgefahr sowie zur Ermöglichung einer noch höheren Drehzahl der Kreiskolbenmaschine ist es vorteilhaft, das Drehventil möglichst gross auszugestalten. Vorzugsweise weist das Drehventil mit seinen Druckfestern im Verhältnis zum Kreiskolben einen vergrösserten Drehventil-Aussendurchmesser auf. Insbesondere ist der Drehventil-Aussendurchmesser um den Faktor 1,3 bis 1,5 grösser als der Kreiskolben-Aussendurchmesser.

Die erfindungsgemässe hydrostatische Kreiskolbenmaschine kann aufgrund ihres hohen Schluckvolumens, das durch Verändern der Zahngeometrie, des Durchmessers und der Länge des Leistungsteils nahezu beliebig vergrössert werden kann, sowie aufgrund der durchgehenden, drehmomentstarken Welle, des geringen Gewichts, des kompakten Aufbaus und der wenigen bewegten Teile als direkt von dem Rotor angetriebene, wirtschaftliche Direkt-Hydropumpe in einer Windenergieanlage eingesetzt werden. Das hohe variable Schluckvolumen ermöglicht einen wirtschaftlichen Betrieb der Kreiskolbenmaschine, da das Schluckvolumen dem momentanen Leistungs- und Drehmomentangebot angepasst werden kann und hydraulische Verluste somit reduziert werden können.

Die erfindungsgemässe Vorrichtung wird nachfolgend anhand von in den Zeichnungen schematisch dargestellten konkreten Ausführungsbeispielen rein beispielhaft näher beschrieben.

Im Einzelnen zeigen:

Fig. 1 einen Längsschnitt durch eine Ausführungsform einer hydrostatischen Windenergieanlage in schematischer Darstellung;

Fig. 2 einen ersten schematischen Hydraulikplan der Ausführungsform aus Figur 1 in Detailansicht;

Fig. 3 einen zweiten schematischen Hydraulikplan einer Ausführungsform einer Windenergieanlage;

Fig. 4 einen Längsschnitt durch eine hydrostatische Kreiskolbenmaschine in der Stellung der Arbeits- und Verstellorgane bei maximaler Schluckmenge pro Wellenumdrehung;

Fig. 5 einen gleichen Längsschnitt in der Stellung der Arbeits- und Verstellorgane bei minimaler Schluckmenge pro Wellenumdrehung;

Fig. 6 einen Querschnitt entlang der Schnittlinie A-A der Figur 4, bei dem die Arbeitsräume als Zahnkammern zwischen dem orbitierenden Kreiskolben und dem Stator sichtbar sind;

Fig. 7 einen Querschnitt entlang der Schnittlinie B-B der Figur 4, der die axial verschiebbare, jedoch nicht drehbare, die Axialwand der Zahnkammern darstellende Statorplatte, die von links unten nach rechts oben schraffiert ist, im Querschnitt darstellt;

Fig. 8 einen Querschnitt entlang der Schnittlinie C-C der Figur 4, der die nicht axialbewegliche, jedoch zusammen mit dem Rotor eine Orbitbewegung ausführende Kreiskolbenplatte, die von rechts unten nach links oben schraffiert ist, im Querschnitt darstellt;

Fig. 9 einen Längsschnitt durch den Radmotor im Bereich der erforderlichen Druckleitungen zur Beaufschlagung axial wirkender Ausgleichsflächen, die unter dem Arbeitsdruck stehen sollen;

Fig. 10 einen Längsschnitt durch die Kreiskolbenmaschine im Bereich der erforderlichen Druckleitungen zur Beaufschlagung der als Regelkolben ausgebildeten Verstellorgane, die unter dem Steuerdruck stehen sollen; und

Fig. 11 einen Längsschnitt durch eine alternative Ausführungsform eines Kreiskolbenmaschine in der Stellung der Arbeits- und Verstellorgane bei maximaler Schluckmenge pro Wellenumdrehung, wobei eine Spreizung der Schluckmenge im Verhältnis von ca. 6:1 möglich ist.

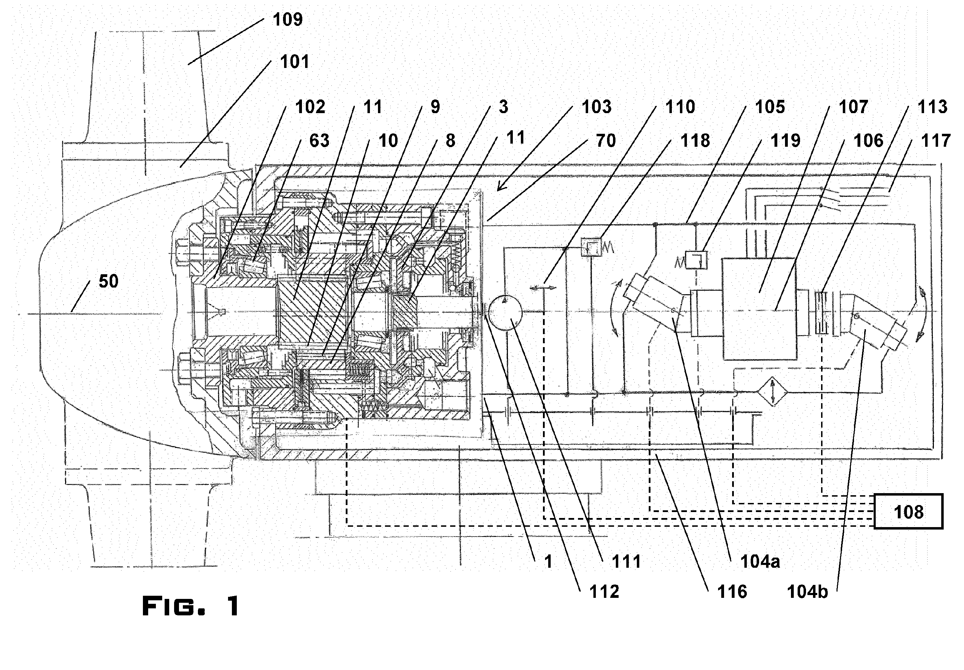

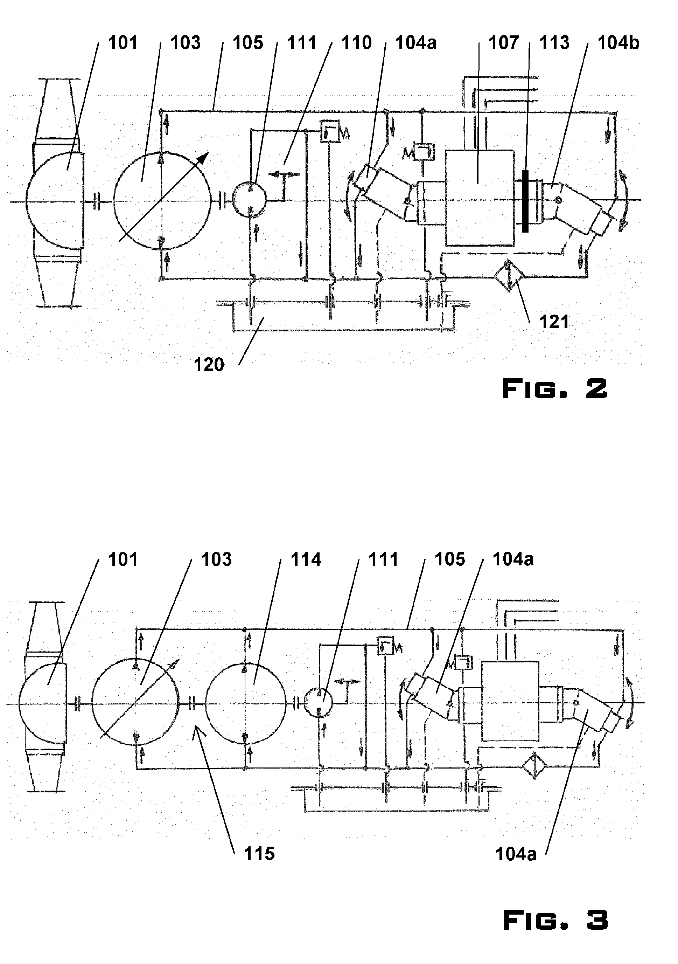

In Figur 1 ist ein Längsschnitt durch ein Gondelgehäuse 116 einer Windenergieanlage mit einem Windrotor 101, der durch einwirkende Windenergie in Rotation um eine Windrotorwelle 102 versetzbar ist. Figur 2 zeigt das Hydraulikschaltbild aus Figur 1 in schematischer detaillierter Ansicht die Figuren 1 und 2 werden im Folgenden gemeinsam beschrieben.

Die Windenergieanlage umfasst eine Hydropumpe 103, die als volumenveränderbare hydrostatische Kreiskolbenmaschine nach dem Orbitprinzip ausgebildet und deren Schluckvolumen somit veränderbar ist. Der Windrotor 101 treibt direkt die volumenveränderbare hydrostatische Kreiskolbenmaschine 103 an, wobei die Windrotorwelle 102 und eine Welle 11 der mindestens einen hydrostatischen Kreiskolbenmaschine 103 als eine gemeinsame Welle ausgebildet sind. Diese gemeinsame Welle 11 ist zentrisch um die geometrische Wellenachse 50 drehbar mittels Radiallager 63 radial und axial gelagert. Somit ist der Windrotor 101 derart mechanisch mit der volumenveränderbaren hydrostatischen Kreiskolbenmaschine 103 gekoppelt, dass Rotationsenergie der Windrotorwelle 102 in hydraulische Energie umgewandelt wird.

Ausserdem sind im Gondelgehäuse 116 zwei regelbare Hydromotoren 104a und 104b angeordnet, die als regelbare Axialkolbenmotoren ausgebildet sind, deren spezifische Schluckvolumina insbesondere unabhängig voneinander veränderbar sind und welche eine gemeinsame Zweitwelle 106, symbolisiert die Wellenachse in Figur 1, antreiben. Die Zweitwelle 106 ist die Welle eines als Synchrongenerator ausgebildeten Generators 107, mit welchem die beiden Hydromotoren 104a und 104b somit derart mechanisch gekoppelt bzw. koppelbar sind, dass die Rotationsenergie der Zweitwelle 106 in elektrische Energie umwandelbar ist, wobei der erzeugte Drehstrom an einem Drehstromanschluss 117 abgreifbar ist. Die beiden Hydropumpen 104a und 104b sind über einen geschlossenen Hydraulikkreislauf 105, einem so genannten Hochdruckkreislauf, mit der hydrostatischen Kreiskolbenmaschine 103 verbunden. Der Druck im Hochdruckkreislauf 105 wird durch eine Druckbegrenzungsventil 119 begrenzt. Ausserdem dient ein Ölkühler 121 zum Kühlen des Hydrauliköls. Dreht sich der Windrotor 101 und drehen sich somit auch die Windrotorwelle 102 und die Welle 11, wird Hydrauliköl von dem Eingang 1 der hydrostatischen Kreiskolbenmaschine 103 zu deren Ausgang 70 gepumpt und von dort über den geschlossenen Hydraulikkreislauf 105 zu den Eingängen der hydraulisch parallel geschalteten Hydromotoren 104a und 104b geleitet, wodurch die Zweitwelle 106 in Rotation versetzt und somit der Generator 106 angetrieben wird. Von den Ausgängen der beiden Hydromotoren 104a und 104b wird das Hydrauliköl über den Hydraulikkreislauf 105 wieder zum Eingang 1 der hydrostatischen Kreiskolbenmaschine geleitet.

Die Hydromotoren 104a und 104b sind über den Hydraulikkreislauf 105 mit der volumenveränderbaren hydrostatischen Kreiskolbenmaschine 103 derart gekoppelt, dass die hydraulische Energie in Rotationsenergie der Zweitwelle 106 umwandelbar ist, wobei das Übersetzungsverhältnis zwischen der Windrotorwelle 102 und der Zweitwelle 106 durch Verändern des spezifischen Schluckvolumens der volumenveränderbaren hydrostatischen Kreiskolbenmaschine 103 und der beiden regelbaren Hydromotoren 104a und 104b veränderbar ist.

Zum Regeln des Übersetzungsverhältnisses zwischen der Windrotorwelle 102 und der Zweitwelle 106 ist eine Regeleinheit 108 vorgesehen, die mit der volumenveränderbaren hydrostatischen Kreiskolbenmaschine 103, dem ersten volumenveränderbaren Hydromotor 104a und dem zweiten volumenveränderbaren Hydromotor 104b in derartiger Verstellverbindung zum Verstellen der jeweiligen Schluckvolumina steht, dass die Drehzahl des Generators 107 bei schwankender Drehzahl des Windrotors 101 innerhalb eines Regelbereichs im Wesentlichen konstant gehalten werden kann.

Der Windrotor 101 hat verstellbare Rotorblätter 109 und Blattverstellmittel 110, insbesondere in Form eines hydraulischen Verstellglieds, mittels welcher die Rotorblätter 109 bezüglich ihres Anstellwinkels verstellt werden können. Zwischen der Regeleinheit 108 und den Blattverstellmitteln 110 besteht eine derartige Verstellverbindung, dass die Drehzahl des Generators 107 bei schwankender Windgeschwindigkeit auch durch Verstellen der Rotorblätter 109 innerhalb eines Regelbereichs im Wesentlichen konstant und der Wirkungsgrad der Anlage optimiert ist.

In der mechanischen Kopplung zwischen dem zweiten Hydromotor 104b und dem Generator 107 ist eine erste Kupplung 113 zum mechanischen Entkoppeln des zweiten Hydromotors 104b von dem Generator 107 angeordnet. Die Regeleinheit 108 ist derart ausgebildet und steht mit der ersten Kupplung 113 in derartiger Verstellverbindung, dass der zweite Hydromotor 104b bei Unterschreiten eines Grenzwerts der Windenergie, der hydraulischen Energie und/oder der Rotationsenergie von dem Generator 107 mechanisch entkoppelt wird. Somit kann insbesondere bei schwachem Wind der Wirkungsgrad der Anlage erhöht werden.

Der Hydraulikkreislauf 105 ist als geschlossener Kreislauf ausgebildet. Eine Speisepumpe 111 versorgt den geschlossenen Hydraulikkreislauf 105, also den Hochdruckkreislauf, über einen Speisekreislauf mit dem Arbeitsfluid aus dem Ölbehälter 120. Der Druck im Speisekreislauf wird durch eine Druckbegrenzungsventil 118 begrenzt. Die Schluckmenge der Speisepumpe 111 ist derart dimensioniert, dass externe Leckströme der beiden Hydromotoren 104a und 104b sowie der hydrostatischen Kreiskolbenmaschine 103 zur Vermeidung eines Unterdrucks im geschlossenen Hydraulikkreislauf 105 kompensiert werden. Somit ist stets ein Mindestdruck, insbesondere am Eingang 1 der hydrostatischen Kreiskolbenmaschine 103 gewährleistet. Die Welle 112 der Speisepumpe 111 und die Welle 11 der hydrostatischen Kreiskolbenmaschine 103 haben die gemeinsame geometrische Wellenachse 50 und werden von der gemeinsamen Welle 11 gebildet. Somit ist die Speisepumpe 111 derart mechanisch mit der Windrotorwelle 102 gekoppelt, dass die Speisepumpe 111 von dem Windrotor 101 antreibbar ist. Die Speisepumpe 111 ist insbesondere als eine aus dem Stand der Technik bekannte Zahnringpumpe mit einer Zahnringpumpenwelle 112 ausgebildet. Alternativ wird die Speisepumpe 111 von einer volumenveränderbaren oder nicht-volumenveränderbaren zweiten hydrostatische Kreiskolbenmaschine nach dem Orbitprinzip ausgebildet ist, deren Aufbau funktional insbesondere dem Aufbau der als Hydropumpe zum Einsatz kommenden hydrostatischen Kreiskolbenmaschine entspricht.

Ausserdem ist es möglich, dass neben der volumenveränderbaren hydrostatischen Kreiskolbenmasche 103 eine nicht-volumenveränderbare Hydropumpe 114 mit dem Windrotor 101 derart mechanisch gekoppelt ist, wobei das spezifische Schluckvolumen der nicht-volumenveränderbaren Hydropumpe 114 konstant ist. Das schematische Hydraulikschaubild einer derartigen Ausführungsform zeigt Figur 3. Die nicht-volumenveränderbare Hydropumpe 114 ist über den Hydraulikkreislauf 105 mit den beiden Hydromotoren 104a und 104b zum Antreiben gekoppelt. In der mechanischen Kopplung zwischen dem Windrotor 101 und der mindestens volumenveränderbaren hydrostatischen Kreiskolbenmaschine 103 und der mindestens einen nicht-volumenveränderbaren zweite Hydropumpe 114 ist eine zweite Kupplung 115 zum mechanischen Entkoppeln der volumenveränderbaren hydrostatischen Kreiskolbenmaschine 103 oder der nicht-volumenveränderbaren Hydropumpe 114 von dem Windrotor 101 angeordnet. Die Regeleinheit 108 ist derart ausgebildet ist und steht mit der zweiten Kupplung 115 in derartiger Verstellverbindung, dass die volumenveränderbare hydrostatische Kreiskolbenmaschine 103 oder die nicht-volumenveränderbare zweite Hydropumpe 114 bei Unterschreiten oder Überschreiten eines Grenzwerts der Windenergie und/oder der Rotationsenergie von dem Windrotor 101 mechanisch entkoppelt wird. Hierdurch ist es insbesondere bei geringer Windstärke möglich, den Wirkungsgrand der Windenergieanlage zu steigern. Die Welle 11 ist in Figur 3 symbolisch dargestellt, wobei die mechanische Kopplung zwischen dem Windrotor 101 mit der volumenveränderbaren hydrostatischen Kreiskolbenmaschine 103, mit der nicht-volumenveränderbaren Hydropumpe 114 und mit der Speisepumpe 111 derart ist, dass die volumenveränderbare hydrostatische Kreiskolbenmaschine 103 und die nicht-volumenveränderbare Hydropumpe 114 unabhängig voneinander mechanisch vom Windrotor 101 mittels der zweiten Kupplung 115 entkoppelt werden können, wobei die Speisepumpe 111 stets angetrieben und eingekoppelt bleibt. Hierzu kommen insbesondere mehrere Wellen und mehrere zweite Kupplungen 115 zum Einsatz.

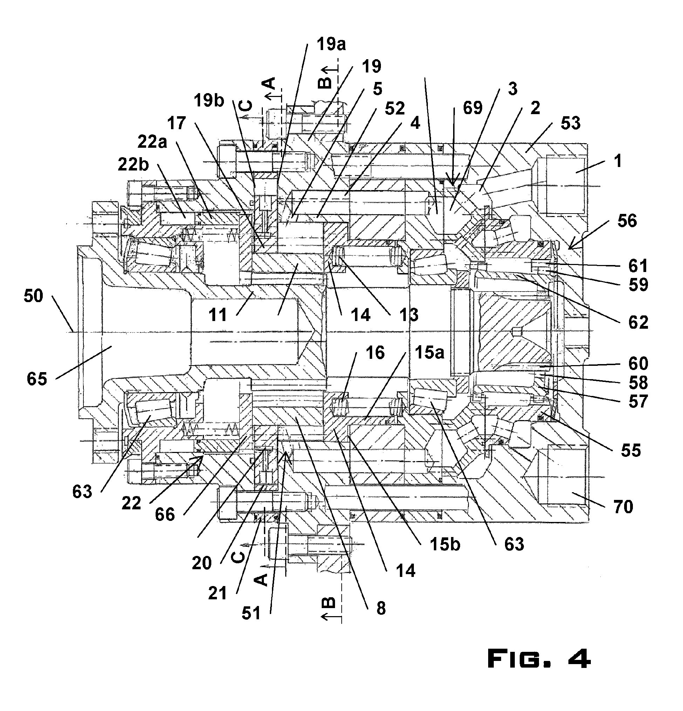

Im Folgenden wird eine bevorzugte, als nach dem Orbitprinzip arbeitende, volumenveränderbare hydrostatische Hochmoment-Kreiskolbenmaschine anhand der Figuren 4 bis 11 beschrieben. Diese Figuren zeigen teilweise eine einzige Ausführung in unterschiedlichen Ansichten mit vereinzelt unterschiedlichem Detaillierungsgrad, weshalb diese Figuren zum Teil gemeinsam erläutert werden. Es wird auf bereits in vorangegangenen Figuren genannte Merkmale und Bezugszeichen verwiesen.

Der vorzugsweise unter einem gewissen Arbeitsdruck stehende Volumenstrom der Arbeitsflüssigkeit in Form eines Arbeitsfluids wird in Figur 4 einem Eingang 1 eines Ein- und Auslassteil 53 im Gehäuse 19 zugeführt, sodass ein mit dem Eingang 1 verbundener äusserer Ringraum 2 um ein scheibenförmiges Drehventil 3 mit Druck beaufschlagt wird, wie in Figur 4 gezeigt. Das scheibenförmige Drehventil 3 ist um eine Wellenachse 50 einer Welle 11 zentrisch drehbar und zur Welle 11 zentrisch laufend gelagert. Durch die Kommutierung des Drehventils 3 fliesst das Arbeitsfluid durch Fenster 7 in ein Leistungteil 51.

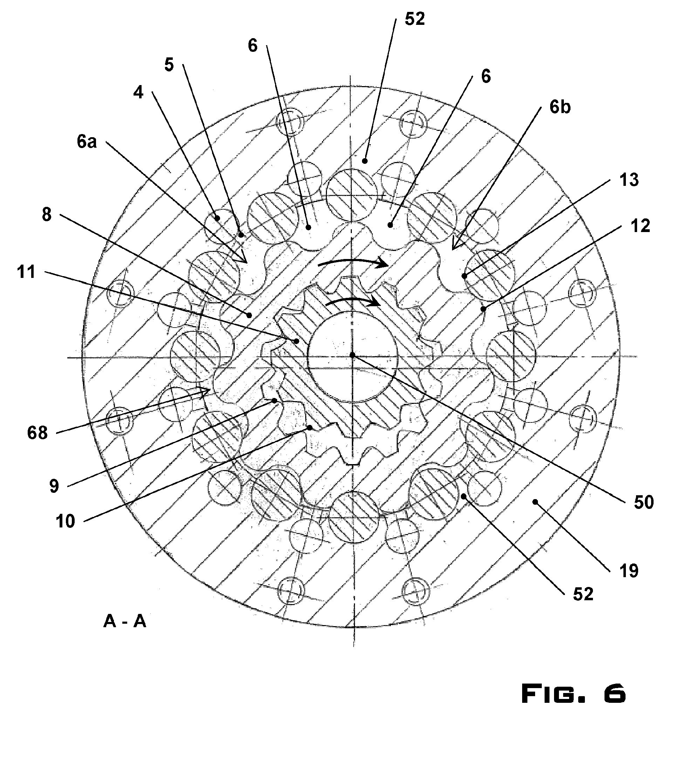

Wie in Figur 6 gezeigt, besitzt das Leistungteil 51 einen zentrischen, feststehenden Stator 52 mit einer als zylindrischen Rollen 13 ausgebildeten Stator-Innenverzahnung mit der Zähnezahl $d=12$, einen Kreiskolben 8 mit einer teilweise in die Stator-Innenverzahnung 13 eingreifenden Kreiskolben-Aussenverzahnung 12 mit einer Zähnezahl $c=11$, einer Kreiskolben-Innenverzahnung 9 mit einer Zähnezahl $b=14$ und einem Kreiskolben-Aussendurchmesser 68. Ausserdem umfasst das Leistungteil 51 die zentrisch um die Wellenachse 50 drehbar gelagerte Welle 11 mit einer teilweise in die Kreiskolben-Innenverzahnung 9 eingreifenden ersten Wellen-Aussenverzahnung 10 mit einer Zähnezahl $a=12$. Der Kreiskolben 8 ist zum Ausführen einer Orbitbewegung somit derart exzentrisch zur Wellenachse 50 angeordnet und die Zähnezahlen a, b, c, d sind, wie oben dargestellt, derart dimensioniert, dass sich mit Arbeitsfluid ver- und entsorgbare Zahnkammern 6 radial zwischen der Stator-Innenverzahnung 13 und der Kreiskolben-Aussenverzahnung 12 bilden.

Das Drehventil 3 ver- und entsorgt die Zahnkammern 6 über axiale Kanäle 4 und radiale Kanäle 5 im Stator 52 mit dem Arbeitsfluid derart, dass das Arbeitsfluid von dem Eingang 1 in einen ersten Teil 6a der Zahnkammern 6 hinein und bei Rotation der Welle 11 und Orbitbewegung des Kreiskolbens 8 zu einem Ausgang 70 aus einem zweiten Teil 6b der Zahnkammern 6 heraus geleitet wird.

Um ein möglichst grosse Menge an Arbeitsfluid in die Zahnkammern 6 hinein und aus den Zahnkammern heraus leiten zu können, hat das Drehventil 3 einen möglichst grossen Drehventil-Aussendurchmesser 69, wie in den Figuren 4, 5 und 10 ersichtlich. Vorzugsweise ist der Drehventil-Aussendurchmesser 69 um den Faktor 1,3 bis 1,5 grösser ist als der Kreiskolben-Aussendurchmesser 68.

Das Drehventil 3 sorgt zusammen mit Fenstern 7 dafür, dass z.B. in der Figur 6 nur der erste Teil 6a der Zahnkammern 6 links der Achsabstandlinie D-D mit Arbeitsfluid versorgt wird. Dreht sich der Kreiskolben 8 in Figur 6 durch Rotation des Windrotors 101 im Uhrzeigersinn, wird das Arbeitsfluid im zweiten Teil 6b der Zahnkammern 6 rechts der Achsabstandlinie D-D verdrängt und über den Ausgang 70 mit hohem Druck abgeführt wird. Wird somit ein Drehmoment über einen aus dem Gehäuse 19 herausgeführten Abschnitt 65 der Welle 10 mittels des Windrotors 101 aufgebracht, wird das Drehmoments der Welle 10 und des Kreiskolbens 8 über die Kreiskolben-Innenverzahnung 9 und die erste Wellen-Aussenverzahnung 10 der Welle 10 in hydraulische Energie des Arbeitsfluids im Ausgang 70 gewandelt. Der Kreiskolben 8 und die Welle 10 drehen sich in der gleichen Richtung, im gezeigten Ausführungsbeispiel im Uhrzeigersinn, wie in Figur 6 durch die beiden Pfeile veranschaulicht.

Das Drehventil 3 wird im Ausführungsbeispiel gemäss den Figuren 4 bis 11 in bekannter Weise mittels eines Taumelgetriebes 56, das als Synchronantrieb für das Drehventil 3 dient, angetrieben. Ein Exzenter 57 des Taumelgetriebes 56 hat eine Exzenter-Innenverzahnung 58 mit einer Zähnezahl x und eine Exzenter-Aussenverzahlung 59 mit einer Zähnezahl y. Die Exzenter-Innenverzahnung 58 kämmt mit einer zweiten Wellenaussenverzahnung 60 der Welle 11 mit einer Zähnezahl w. Die Exzenter-Aussenverzahlung 59 kämmt mit einem feststehenden Innenzahnkranz 61 mit einer Zähnezahl z. Die Zähnezahlen w, x, y, z sind derart dimensioniert, dass der Exzenter 57 exzentrisch zur Wellenachse 50 zwischen der Welle 11 und dem Innenzahnkranz 61 bei Drehung der Welle 11 eine Orbitbewegung ausführt. Mögliche Zähnezahlkombinationen sind den obigen Ausführungen zu entnehmen. Ein topfförmiges Verbindungsteil 62 ist mit dem exzentrisch drehbaren Exzenter 57 einenends drehfest gekoppelt. Anderenends ist das topfförmige Verbindungsteil 62 mit dem zentrisch drehbaren Drehventil 3 1:1 drehfest über eine taumelnde Verbindung verbunden. Eine Drehbewegung von der Welle 11 wird somit über den Exzenter 57 auf das Drehventil 3 übertragen.

Alternativ besteht jedoch auch die Möglichkeit, das genannte Taumelgetriebes 56 wegzulassen und das Drehventil 3 direkt mit der Welle 11 1:1 drehfest zu verbinden, sofern auch der Kreiskolben 8 mit dessen Kreiskolben-Innenverzahnung 9 und die Wellen 11 mit der ersten Wellen-Aussenverzahnung 10 eine 1:1-Übersetzung aufweisen. Eine solche Ausführung einer volumenveränderbaren hydrostatischen Kreiskolbenmaschine zeigt die Figur 1.

Die Welle 11 ist radial über zwei beidseitig am Leistungsteil 51 benachbarte Radiallager 63 gelagert, die als Wälzlager in O-Anordnung ausgebildet sind.

Um das Drehventil 3 axial zu fixieren und axial gegen Leckage des Arbeitsfluids abzudichten, ist ein drehfester axialer zweiter Ausgleichskolben 55, der axial auf das Drehventil 3 wirkt, rings um das Taumelgetriebe 56 angeordnet. Der feststehenden Innenzahnkranz 61 ist innerhalb dieses axialen zweiten Ausgleichskolbens 55 ausgebildet.

Die Schluckmenge und somit auch das Drehmoment, das die Welle 11 an den Kreiskolben 8 bei Anliegen eines vom Windrotor 101 hervorgerufenen Drehmoments an der Welle 11 weitergibt, hängen entscheidend davon ab, wie gross die wirksame Breite des Zahneingriffs in den Zahnkammern 6 zwischen einer Kreiskolben-Aussenverzahnung 12 und der Stator-Innenverzahnung 13 ist. In der Figur 6 ist die Stator-Innenverzahnung in der Form von Rollen 13 gezeigt, was eine besonders vorteilhafte Ausbildung dieser Zahnform, mit gravierenden Vorzügen darstellt.

Der Kreiskolben 8 ist mit seiner Kreiskolben-Innenverzahnung 9 auf der ersten Wellen-Aussenverzahnung 10 relativ zur Welle 11 und mit seiner Kreiskolben-Aussenverzahnung 12 auf der Stator-Innenverzahnung 13 relativ zum Stator 52 parallel zur Wellenachse 50 axial verschiebbar. Die Verschiebbarkeit wird durch Verstellorgane 22 ermöglicht, die mit dem Kreiskolben 8 in Eingriff stehen und mittels welcher selbiger axial verschiebbar ist. Die Zahnkammern 6 sind dabei in axialer Richtung zwischen einer axial feststehenden Kreiskolbenplatte 17 und einer axial beweglichen Statorplatte 14 angeordnet.

Sie werden durch die Kreiskolbenplatte 17 und die Statorplatte 14 axial begrenzt und abgedichtet. Die Kreiskolbenplatte 17 ist axial feststehend und radial mit dem Kreiskolben 8 gekoppelt. Somit führt sie die Orbitalbewegung des Kreiskolbens 8 gemeinsam mit dem Kreiskolben 8 aus. Die Statorplatte 14 ist axial beweglich, axial mit dem Kreiskolben 8 gekoppelt und radial vom Kreiskolben 8 entkoppelt. Das Volumen der Zahnkammern 6 ist somit durch das axiale Verschieben des Kreiskolbens 8 und der Statorplatte 14 mittels der Verstellorgane 22 stufenlos veränderbar. Im Folgenden wir diese allgemeine Anordnung genauer erläutert.

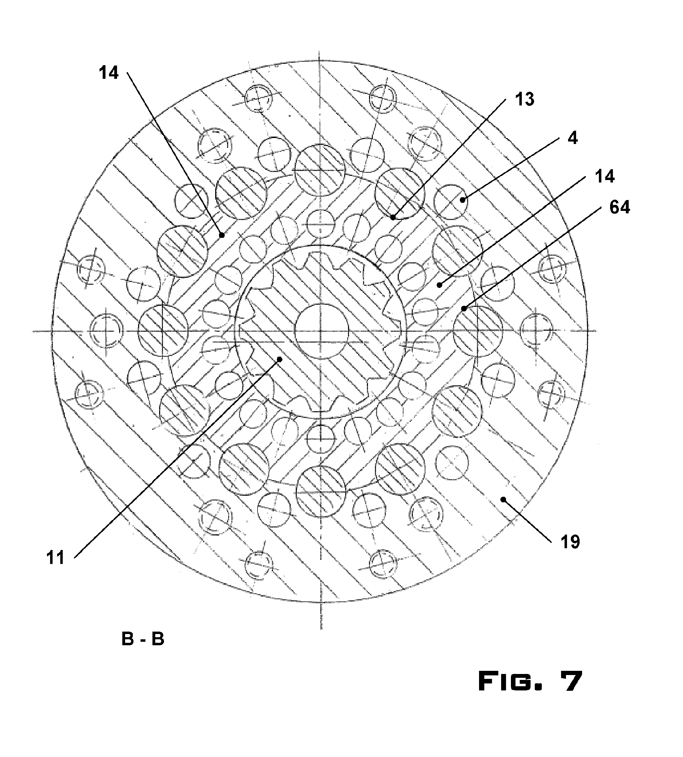

Die axial bewegliche Statorplatte 14, die in Figur 7 im Querschnitt dargestellt ist, greift mit ihrer Statorplatten-Aussenverzahnung 64 in die Stator-Innenverzahnung 13 mit der Zähnezahl d=12 derart auf in axialer Richtung dichtende Weise passgenau ein, dass die Statorplatte 14 relativ zum axial feststehenden Stator 52 gemeinsam mit dem Kreiskolben 8 axial verschiebbar ist.

Mit der Statorplatte 14 ist ein - insbesondere ringförmiger - Ausgleichskolben 15a axial gekoppelt. Der Ausgleichskolben 15a wird von einem Kolbenansatz der Statorplatte 14 gebildet. In anderen Worten sind der Ausgleichskolben 15a und die Statorplatte 14 einstückig ausgebildet. Dieser Ausgleichskolben 15a ist in dem feststehenden Gehäuse 19 angeordnet und mit Arbeitsfluids der Zahnkammern 6 beaufschlagbar. Der Ausgleichskolben 15a greift in einen axialen - insbesondere ringförmigen - Ausgleichszylinder 15b derart ein, dass der Arbeitsdruck in dem Ausgleichszylinder 15b über die Statorplatte 14 dem Arbeitsdruck in den Zahnkammern 6 entgegenwirkt und somit eine Kraft auf den Kreiskolben 8 in Richtung einer Ausgangsstellung mit einem reduzierten Volumen der Zahnkammern 6 wirkt. Zwischen dem Ausgleichskolben 15a und dem Ausgleichszylinder 15b wirken Regelfedern 16, die den Ausgleichskolben 15a axial gegen den Kreiskolben 8 und somit den Kreiskolben 8 in Richtung einer Ausgangsstellung mit einem reduziertem Volumen der Zahnkammern 6 drücken.

Wie aus der Figur 4 erkennbar, ist die Breite des Zahneingriffs zwischen der Kreiskolben-Aussenverzahnung 12 und der Stator-Innenverzahnung 13 besonders voluminös, so dass dementsprechend ein grosses Schluckvolumen pro Kreiskolbenumdrehung und somit pro Wellenumdrehung erzeugt wird. Dabei ist die Statorplatte 14 mit ihrem Kolbenansatz, der den Ausgleichskolben 15a bildet, zusammen mit dem Kreiskolben 8 ganz nach rechts verschoben. Die Regelfedern 16 sind dabei vollständig zusammengedrückt und erzeugen dadurch die höchstmögliche Axialkraft auf die Statorplatte 14. Dabei ist der höchstmögliche geregelte Arbeitsdruck in den Zahnkammern 6 erreicht, sofern dieser nicht noch über das Blockmass der Regelfedern 16 gesteigert werden soll, was durchaus möglich wäre.

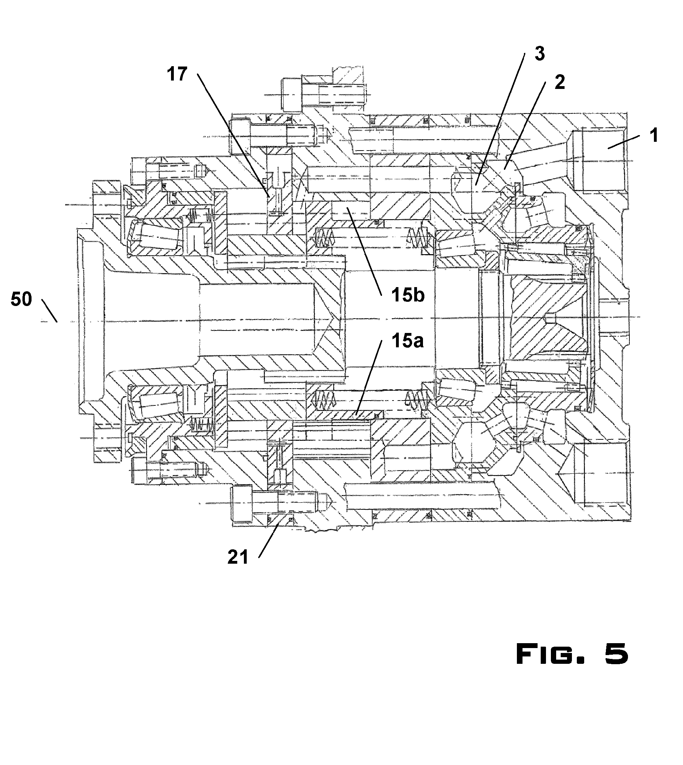

In Figur 5 befindet sich die Statorplatte 14 in ihrer linken Grenzlage. Die Regelfedern 16 sind weitgehend entspannt, entsprechend einem niedrigen Druck in den Zahnkammern 6. Die effektive Breite des Zahneingriffs zwischen der Kreiskolben-Aussenverzahnung 12 und der Stator-Innenverzahnung 13 ist stark reduziert. Daraus ergibt sich die gewünschte starke Reduktion der spezifischen Schluckmenge im Verhältnis der reduzierten effektiven Zahnbreite zur maximalen effektiven Zahnbreite in Figur 4. Der Übergang von der maximalen effektiven Zahnbreite zur minimalen effektiven Zahnbreite kann kontinuierlich erfolgen, weshalb eine stufenlose Regelung der Schluckmenge möglich ist.

Die Verschliessung der Zahnkammern 6 nach links in den Figuren 4 und 5 erfolgt durch die Kreiskolbenplatte 17. Diese besitzt eine Kreiskolbenplatten-Innenverzahnung 18, die exakt der Kreiskolben-Aussenverzahnung 12 des Kreiskolbens 8 entspricht, wobei ein Bewegungsspiel von wenigen hundertstel Millimeter vorgesehen ist, sodass ein hohes Mass an Dichtheit zwischen den Zahnkammern 6 und dem drucklosen Innenraum der Maschine besteht. Dieses Laufspiel braucht nicht grösser zu sein als dass sichergestellt ist, dass der Kreiskolben darin axial verschieblich ist. Diese Kreiskolbenplatte 17 muss somit die Orbitbewegung des Kreiskolbens 8 mit möglichst wenig Reibungsverlustmitmachen. Sie ist axial nicht beweglich und ist mit einem minimalen Axialspiel zwischen den Gehäuseteilen 19a und 19b radialbeweglich geführt. Die Kreiskolbenplatte 17 ist somit in einer scheibenartigen Ausnehmung im Gehäuse 19 zwischen einem ersten Gehäuseteil 19a und einem zweiten Gehäuseteil 19b radialbeweglich und radial dichtend gelagert. Im Gehäuse 19 ist somit eine der Orbitbewegung der Kreiskolbenplatte 17 entsprechende freie Beweglichkeit in radialer Richtung und in Umfangsrichtung vorgesehen.

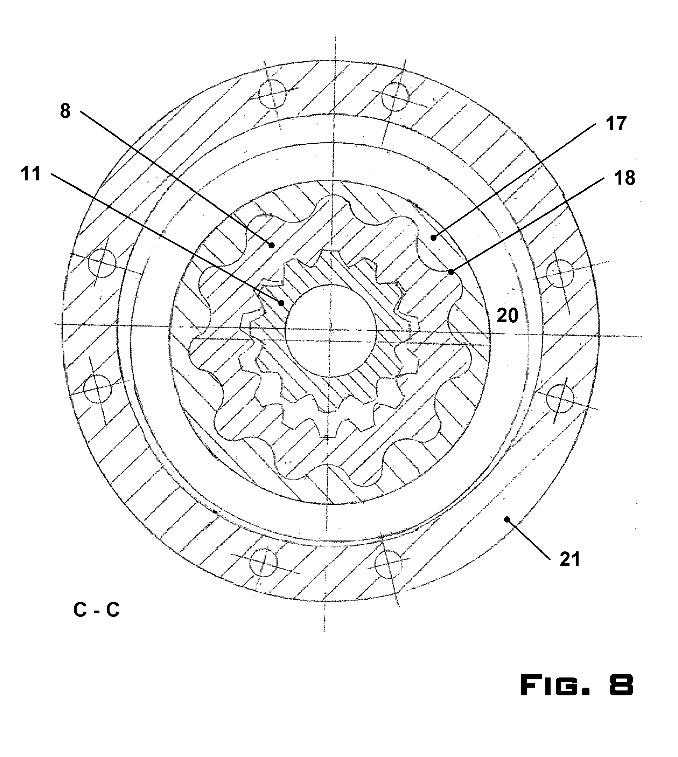

Figur 8 zeigt einen Querschnitt durch die axiale Mitte dieser Kreiskolbenplatte 17, in die radial von aussen eine Nut 20 eingestochen ist, damit das durch die Orbitbewegung der Kreiskolbenplatte 17 zwischen einem Gehäusering 21 verdrängte zähflüssige Arbeitsfluid nicht zu grosse Quetschverluste erzeugt.

Die Verstellorgane 22 sind, wie in den Figuren 4 und 5 gezeigt, als ein ringförmig zentrisch um den Abtriebsabschnitt 65 der Welle 11 angeordneten Regelkolben 22a ausgebildet, der mit dem Kreiskolben 8 axial über eine sich radial erstreckende Zwischenscheibe 66 in Eingriff steht, wie in den Figuren 4 und 5 gezeigt. Der Regelkolben 22a ist derart angeordnet, dass er über die Zwischenscheibe 66 den Kreiskolben 8 gegen den Ausgleichskolben 15a und gegen die Regelfedern 16 drückt. In dem Gehäuse 19 ist ein axialer Regelzylinder 22b angeordnet, der mit einem Steuerdruck beaufschlagbar ist und in welchen der Regelkolben 22a derart eingreift, dass mittels des Steuerdrucks in dem Regelzylinder 22b eine Kraft auf den Kreiskolben 8 zum axialen Verschieben des Kreiskolbens 8 ausgeübt werden kann. Durch dieses Verschieben kann das Volumen der Zahnkammern 6 insbesondere aktiv verändert werden. Sowohl der Regelkolben 22a, als auch der Regelzylinder 22b umschliessen ringförmig zentrisch den Abtriebsabschnitt 65 der Welle 11.

Dass es überhaupt möglich ist, eine Kreiskolbenmaschine nach dem Orbitprinzip so zu konstruieren, dass eine stufenlose Veränderung des Schluckvolumens möglich ist, ist dem Umstand zu verdanken, dass gemäss der Ausführung einer solchen Maschine nach der WO 2006/010471 an den Kreiskolben 8 das Drehmoment über die erste Wellen-Aussenverzahnung 10 der Welle 11 an seine Kreiskolben-Innenverzahnung 9 weiterleitet wird, auf welcher Welle 11 der Kreiskolben 8 axialbeweglich ist und dort gegen Verkippen ein gutes Führungsverhältnis bekommt. Die axialen Kraftvektoren bei dieser Kreiskolbenmaschine gleichen sich in keiner Weise versatzfrei aus, sondern laufen mit deutlichem Abstand aneinander vorbei. Während die Kraft des Ausgleichskolbens 15a an der Statorplatte 14 und des Regelkolbens 22a genau im Zentrum der Maschine versatzfrei wirksam sind und sich teilweise ausgleichen, ist die resultierende hydraulische Axialkraft der Zahnkammern 6 deutlich mit Abstand zu den Kolbenkräften versetzt. Daraus resultiert ein beträchtliches Kippmoment einerseits auf die Statorplatte 14 und die Kreiskolbenplatte 17 und somit auch auf den Kreiskolben 8. Um Verkantung und daraus resultierende grosse Reibungskräfte zu vermeiden, benötigt man sowohl für den Kreiskolben 8 als auch insbesondere für die Statorplatte 14 mit ihrem Ausgleichskolben 15 ein gutes Führungsverhältnis. Deshalb ist es vorteilhaft, wenn der Ausgleichskolben 15a fest mit der Statorplatte 14 verbunden ist, um das Führungsverhältnis zu verbessern. Ferner ist konstruktiv anzustreben, auch den Zahneingriff zwischen der Kreiskolben-Innenverzahnung 9 und der ersten Wellen-Aussenverzahnung 10 so lang wie möglich auszuführen.

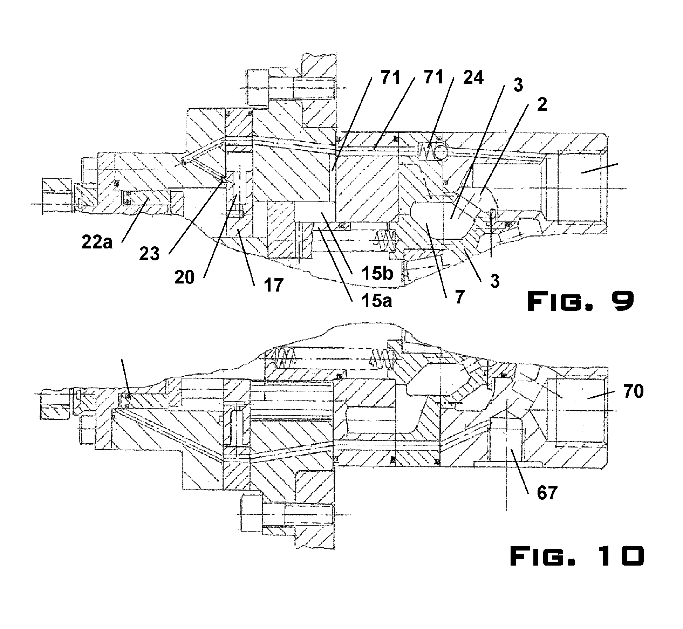

In der Figur 9 sind Kanäle 71 gezeigt, in denen der angesaugte Arbeitsdruck vom Eingang 1 zum Ausgleichskolben 15a, zum Ausgleichszylinder 15b und zu einem Ausgleichsdruckfeld 23 für die Kreiskolbenplatte 17 geleitet wird. Ventile 24, insbesondere Check-Ventile, sorgen dafür, dass der Arbeitsdruck bei verschiedenen Drehrichtungen stets an die richtige Stelle geleitet wird.

Wie in den Figuren 4 und 5 gezeigt, besteht in einer ersten Ausführungsform der Erfindung eine derartige direkte oder indirekte Verbindung zwischen dem Eingang 1 und dem Regelzylinder 22b, dass der Regelkolben 22a mit dem Arbeitsfluid beaufschlagt wird, so dass der Regelkolben 22a bei steigendem Arbeitsdruck den Kreiskolben 8 und die Statorplatte nach rechts in die in Figur 4 dargestellte Stellung mit einem vergrösserten Volumen der Zahnkammern 6 drückt, so dass das Drehmoment bei steigendem Arbeitsdruck steigt. Der Arbeitsdruck im Regelkolben 22a wirkt also den Regelfedern 16 ebenso entgegen wie der Arbeitsdruck in den Zahnkammern 6.

In einer anderen, in Figur 10 gezeigten Ausführungsform hat die Kreiskolbenmaschine einen Steuerdruckanschluss 67, der mit dem Regelzylinder 22b derart über Leitungen verbunden ist, dass der Regelkolben 22a mit einem Steuerdruck aus dem Steuerdruckanschluss 67 beaufschlagt werden kann. In der Figur 10 ist also für die Versorgung des Regelkolbens 22a eine getrennte Druckleitung mit einem Steuerdruckanschluss 67 vorgesehen. Somit ist es möglich, die Schluckmenge der Kreiskolbenmaschinen insbesondere abhängig von der Auslegung der Regelfedern 16 im Wesentlichen unabhängig vom Drehmoment aktiv durch Variieren des Steuerdrucks zu verstellen.

Für die Steuerung der stufenlos veränderbaren Schluckmenge pro Wellenumdrehung der hydrostatischen Kreiskolbenmaschine kann hierzu ein elektronisch betätigtes Magnet-Zweikanten-Steuerventil vorgesehen sein, mittels welchem beispielsweise der Steuerdruck am Steuerdruckanschluss 67 steuerbar ist.

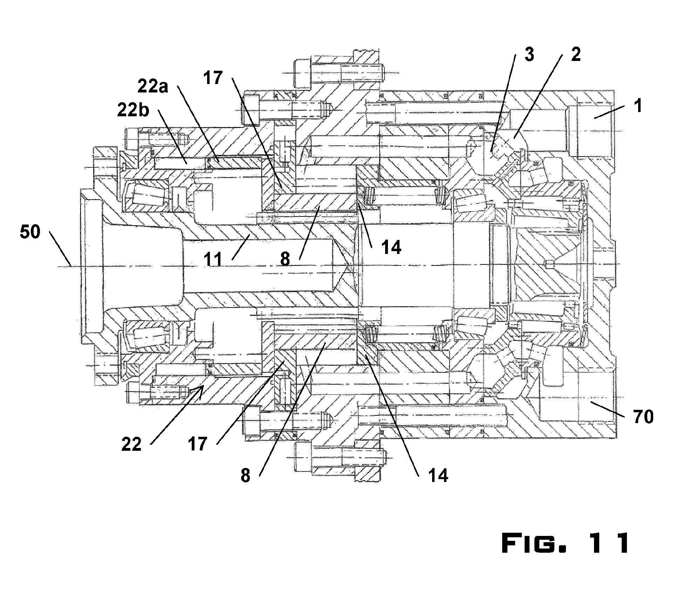

In der Figur 11 ist eine alternative Ausführungsform einer erfindungsgemässen volumenveränderbaren hydrostatischen Kreiskolbenmaschine mit einem entlang der Wellenachse 50 verlängerten Kreiskolben 8, einer verlängerten Welle 11, einem längeren Regelkolben 22a und einem längeren Regelzylinder 22b sowie einem grösseren Abstand von Statorplatte 14 und Kreiskolbenplatte 17 und somit auch einem grösseren Verstellbereich der Verstellorgane 22 dargestellt. Hierdurch wird eine Spreizung des Schluckvolumens mit dem Wert 6:1 erreicht. Gegenüber der Ausführung der Kreiskolbenmaschine gemäss Figur 4 und Figur 5 wird dieser nur etwa um 16% länger. Die restlichen Merkmale entsprechen den Merkmalen des vorangegangenen Ausführungsbeispiels, auf welches hiermit verwiesen sei.

Die Erfindung ist selbstverständlich nicht auf die hier in den Zeichnungen schematisch dargestellten und erläuterten Ausführungsbeispiele beschränkt.

**Patentansprüche**

1. Windenergieanlage mit

   • einem Windrotor (101), der durch einwirkende Windenergie in Rotation um eine Windrotorwelle (102) versetzbar ist,
   • mindestens einer Hydropumpe (103), mit welcher der Windrotor (101) derart mechanisch gekoppelt oder koppelbar ist, dass Rotationsenergie der Windrotorwelle (102) in hydraulische Energie umwandelbar ist,
   • mindestens einem Hydromotor (104a, 104b), der über einen Hydraulikkreislauf (105) mit der mindestens einen Hydropumpe (103) derart gekoppelt ist, dass die hydraulische Energie in Rotationsenergie einer Zweitwelle (106) umwandelbar ist, wobei das Übersetzungsverhältnis zwischen der Windrotorwelle (102) und der Zweitwelle (106) durch Verändern des spezifischen Schluckvolumens der mindestens einen Hydropumpe (103) und/oder des mindestens einen Hydromotors (104a, 104b) veränderbar ist,
   • einem Generator (107), mit welchem der mindestens eine Hydromotor (104a, 104b) derart mechanisch gekoppelt oder koppelbar ist, dass die Rotationsenergie der Zweitwelle (106) in elektrische Energie umwandelbar ist, und
   • einer zum Regeln des Übersetzungsverhältnisses ausgebildeten Regeleinheit (108), die mit der mindestens einen Hydropumpe (103) und/oder dem mindestens einen Hydromotor (104a, 104b) in derartiger Verstellverbindung steht, dass die Drehzahl des Generators (107) bei schwankender Drehzahl des Windrotors (101) innerhalb eines Regelbereichs im Wesentlichen konstant ist,
   **dadurch gekennzeichnet, dass**
   die mindestens eine Hydropumpe als mindestens eine hydrostatische Kreiskolbenmaschine (103) nach dem Orbitprinzip ausgebildet ist, mit
   • einem als Antrieb wirkenden, in einem Gehäuse (19) angeordneten Leistungsteil (51), der

      - einen zentrischen, feststehenden Stator (52) mit einer insbesondere von kreiszylindrischen Rollen gebildeten Stator-Innenverzahnung (13) mit der Zähnezahl d,
      - einen Kreiskolben (8) mit einer teilweise in die Stator-Innenverzahnung (13) eingreifenden Kreiskolben-Aussenverzahnung (12) mit einer Zähnezahl c und einer Kreiskolben-Innenverzahnung (9) mit einer Zähnezahl b, und
      - eine zentrisch um eine Wellenachse (50) drehbar gelagerte, mir der Windrotorwelle (102) gekoppelte Welle (11) mit einer teilweise in die Kreiskolben-Innenverzahnung

(9) eingreifenden ersten Wellen-Aussenverzahnung (10) mit einer Zähnezahl a umfasst, wobei der Kreiskolben (8) zum Ausführen einer Orbitbewegung derart exzentrisch zur Wellenachse (50) angeordnet ist und die Zähnezahlen a, b, c, d derart dimensioniert sind, dass sich mit Arbeitsfluid ver- und entsorgbare Zahnkammern (6) radial zwischen der Stator-Innenverzahnung (13) und der Kreiskolben-Aussenverzahnung (12) bilden,

• einem insbesondere scheibenförmigen Drehventil (3), das um die Wellenachse (50) drehbar ist, zur derart kommutierenden Steuerung der Ver- und Entsorgung der Zahnkammern (6) mit einem Arbeitsfluid, dass das Arbeitsfluid in einen ersten Teil (6a) der Zahnkammern (6) hinein und aus einem zweiten Teil (6b) der Zahnkammern (6) zur Erzeugung eines Ölflusses mit der hydraulischen Energie heraus leitbar ist, wobei der herausgeleitete Ölfluss über den Hydraulikkreislauf (105) dem mindestens einen Hydromotor (104a, 104b) zugeführt ist, und
• zwei beidseitig am Leistungsteil (51) auf der Welle (11) angeordneten Radiallagern (63) zur radialen Lagerung der Welle (11).

2. Windenergieanlage nach Anspruch 1,
   **dadurch gekennzeichnet, dass**

   • die hydrostatische Kreiskolbenmaschine (103) als volumenveränderbare hydrostatische Kreiskolbenmaschine (103) nach dem Orbitprinzip ausgebildet ist, wobei das pro Umdrehung der Windrotorwelle (102) spezifische Schluckvolumen der mindestens einen volumenveränderbaren hydrostatischen Kreiskolbenmaschine (103) veränderbar ist,
   • der Kreiskolben (8) mit seiner Kreiskolben-Innenverzahnung (9) auf der ersten Wellen-Aussenverzahnung (10) relativ zur Welle (11) und mit seiner Kreiskolben-Aussenverzahnung (12) auf der Stator-Innenverzahnung (13) relativ zum Stator (52) parallel zur Wellenachse (50) axial verschiebbar ist,
   • Verstellorgane (22) mit dem Kreiskolben (8) in Eingriff stehen, mittels welcher der Kreiskolben (8) axial verschiebbar ist,
   • die Zahnkammern (6) in axialer Richtung zwischen

   - einer axial feststehenden und radial mit dem Kreiskolben (8) gekoppelten, die Orbitalbewegung des Kreiskolbens (8) ausführenden Kreiskolbenplatte (17) und
   - einer axial beweglichen, axial mit dem Kreiskolben (8) gekoppelten und radial vom Kreiskolben (8) entkoppelten Statorplatte (14)

angeordnet sind und durch die Kreiskolbenplatte (17) und die Statorplatte (14) axial abgedichtet sind, wobei das Volumen der Zahnkammern (6) durch das axiale Verschieben des Kreiskolbens (8) und der Statorplatte (14) mittels der Verstellorgane (22) insbesondere stufenlos veränderbar ist,

• die radial mit dem Kreiskolben (8) gekoppelte Kreiskolbenplatte (17) im Gehäuse (19) eine zumindest der Orbitbewegung der Kreiskolbenplatte (17) entsprechende freie Beweglichkeit in radialer Richtung und in Umfangsrichtung aufweist und
• die Kreiskolbenplatte (17) im Gehäuse (19) derart radial dichtend geführt ist, dass die Kreiskolbenplatte (17) bei ihrer Orbitbewegung die Zahnkammern (6) nach aussen abdichtet.

3. Windenergieanlage nach Anspruch 2,
   **dadurch gekennzeichnet, dass**
   die axial feststehende Kreiskolbenplatte (17) mit einer Kreiskolbenplatten-Innenverzahnung (18) in die Kreiskolben-Aussenverzahnung (12) mit der Zähnezahl c derart auf in axialer Richtung dichtende Weise passgenau eingreift, dass der Kreiskolben (8) relativ zur axial feststehenden Kreiskolbenplatte (17) axial verschiebbar ist.

4. Windenergieanlage nach Anspruch 2 oder 3,
   **dadurch gekennzeichnet, dass**
   die Kreiskolbenplatte (17) in einer scheibenartigen Ausnehmung im Gehäuse (19), insbesondere zwischen einem ersten Gehäuseteil (19a) und einem zweiten Gehäuseteil (19b) des Gehäuses (19), radialbeweglich und radial dichtend gelagert ist.

5. Windenergieanlage nach einem der Ansprüche 2 bis 4,
   **dadurch gekennzeichnet, dass**
   die axial bewegliche Statorplatte (14) mit einer Statorplatten-Aussenverzahnung (64) in die Stator-Innenverzahnung (13) mit der Zähnezahl d derart auf in axialer Richtung dichtende Weise passgenau eingreift, dass die Statorplatte (14) relativ zum axial feststehenden Stator (52) gemeinsam mit dem Kreiskolben (8) axial verschiebbar ist.

6. Windenergieanlage nach einem der Ansprüche 2 bis 5,
   **dadurch gekennzeichnet, dass**
   mit der Statorplatte (14) ein insbesondere ringförmiger Ausgleichskolben (15a) axial gekoppelt ist, der in einen im feststehenden Gehäuse (19) angeordneten, mit dem Arbeitsdruck des Arbeitsfluids der Zahnkammern (6) beaufschlagbaren, axialen und insbesondere ringförmigen Ausgleichszylinder (15b) derart eingreift, dass der Arbeitsdruck in dem Ausgleichszylinder (15b) über die Statorplatte (14) dem Arbeitsdruck in den Zahnkammern (6) zumindest teilweise entgegenwirkt und somit eine Kraft auf den Kreiskolben (8) in Richtung einer Ausgangsstellung mit einem reduzierten Volumen der Zahnkammern (6) wirkt, insbesondere wobei die Statorplatte (14) und der Ausgleichskolben (15a) einstückig ausgebildet sind.

7. Windenergieanlage nach Anspruch 6,
   **dadurch gekennzeichnet, dass**
   zwischen dem Ausgleichskolben (15a) und dem Ausgleichszylinder (15b) wirkende Regelfedern (16), die den Ausgleichskolben (15a) axial gegen den Kreiskolben (8) und somit den Kreiskolben (8) in Richtung einer Ausgangsstellung mit einem reduziertem Volumen der Zahnkammern (6) drücken, angeordnet sind.

8. Windenergieanlage nach einem der Ansprüche 2 bis 7,
   **dadurch gekennzeichnet, dass**

   • die Verstellorgane als ein Regelkolben (22a) ausgebildet sind,
   • der Regelkolben (22a) mit dem Kreiskolben (8) axial in Eingriff steht,
   • der Regelkolben (22a) in einen im feststehenden Gehäuse (19) angeordneten, mit einem Steuerdruck beaufschlagbaren, axialen Regelzylinder (22b) derart eingreift, dass mittels des Steuerdrucks in dem Regelzylinder (22b) eine Kraft auf den Kreiskolben (8) zum axialen Verschieben des Kreiskolbens (8) und zum Ändern des Volumens der Zahnkammern (6) ausübbar ist,
   • insbesondere der Regelkolben (22a) und der Regelzylinder (22b) ringförmig zentrisch um einen Abtriebsabschnitt (65) der Welle (11) im Gehäuse (19) angeordnet sind,
   • insbesondere eine derartige direkte oder indirekte Verbindung zwischen dem Druckanschluss (1) und dem Regelzylinder (22b) besteht, dass der Regelkolben (22a) mit dem Arbeitsdruck des Arbeitsfluids beaufschlagbar ist,
   • insbesondere ein Steuerdruckanschluss (67) mit dem Regelzylinder (22b) derart verbunden ist, dass der Regelkolben (22a) mit einem Steuerdruck aus dem Steuerdruckanschluss (67) - insbesondere wahlweise anstatt mit dem Arbeitsdruck des Arbeitsfluids aus dem Druckanschluss (1) - zur Verstellen des Schluckvolumens beaufschlagbar ist.

9. Windenergieanlage nach Anspruch 8, rückbezogen auf einen der Ansprüche 6 oder 7,

**dadurch gekennzeichnet, dass**
der Regelkolben (22a) derart angeordnet ist, dass er insbesondere über eine Zwischenscheibe (66) den Kreiskolben (8) gegen den Ausgleichskolben (15a) und insbesondere gegen die Regelfedern (16) drückt.

10. Windenergieanlage nach einem der Ansprüche 2 bis 10,
    **gekennzeichnet durch**
    mindestens eine nicht-volumenveränderbare Hydropumpe (114), mit welcher der Windrotor (101) derart mechanisch gekoppelt oder koppelbar ist, dass Rotationsenergie der Windrotorwelle (102) in hydraulische Energie umwandelbar ist, wobei

    • das spezifische Schluckvolumen der mindestens einen nicht-volumenveränderbaren Hydropumpe (114) konstant ist und
    • die mindestens eine nicht-volumenveränderbare Hydropumpe (114), insbesondere mittels der Regeleinheit (108) in Abhängigkeit von der Windenergie, über den Hydraulikkreislauf (105) mit dem mindestens einen Hydromotor (104a, 104b) zum Antreiben gekoppelt ist.

11. Windenergieanlage nach Anspruch 10,
    **dadurch gekennzeichnet, dass**
    in der mechanischen Kopplung zwischen dem Windrotor (101) und

    • der mindestens einen volumenveränderbaren hydrostatischen Kreiskolbenmaschine (103) und/oder
    • der mindestens einen nicht-volumenveränderbaren zweite Hydropumpe (114)

    eine zweite Kupplung (115) zum mechanischen Entkoppeln der mindestens einen volumenveränderbaren hydrostatischen Kreiskolbenmaschine (103) und/oder der mindestens einen nicht-volumenveränderbaren Hydropumpe (114) von dem Windrotor (101) angeordnet ist.

12. Windenergieanlage nach Anspruch 11,
    **dadurch gekennzeichnet, dass**
    die Regeleinheit (108) derart ausgebildet ist und mit der zweiten Kupplung (115) in derartiger Verstellverbindung steht, dass die mindestens eine volumenveränderbare hydrostatische Kreiskolbenmaschine (103) und/oder die mindestens eine nicht-volumenveränderbare zweite Hydropumpe (114) bei Unterschreiten oder Überschreiten eines Grenzwerts der Windenergie und/oder der Rotationsenergie von dem Windrotor (101) mechanisch entkoppelt wird.

13. Windenergieanlage nach einem der Ansprüche 1 bis 12,

**dadurch gekennzeichnet, dass**
der Windrotor (101) verstellbare Rotorblätter (109) und Blattverstellmittel (110) aufweist, wobei die Regeleinheit (108) derart ausgebildet und mit den Blattverstellmitteln (110) in derartiger Verstellverbindung steht, dass die Drehzahl des Generators (107) bei schwankender Windgeschwindigkeit durch Verstellen der Rotorblätter (109) und insbesondere durch Verstellen des Übersetzungsverhältnisses innerhalb eines Regelbereichs im Wesentlichen konstant ist.

14. Windenergieanlage nach einem der Ansprüche 1 bis 13,
**dadurch gekennzeichnet, dass**

• die Windrotorwelle (102) und
• die Welle (11) der mindestens einen hydrostatischen Kreiskolbenmaschine (103)
als eine gemeinsame Welle, die zentrisch um die geometrische Wellenachse (50) drehbar mittels der Radiallager (63) radial und insbesondere axial gelagert ist, ausgebildet sind.

15. Windenergieanlage nach einem der Ansprüche 1 bis 14,
**dadurch gekennzeichnet, dass**
der Hydraulikkreislauf (105) als geschlossener Kreislauf ausgebildet ist, mit einer Speisepumpe (111) zur Versorgung des geschlossenen Hydraulikkreislauf (105) mit dem Arbeitsfluid, wobei die Schluckmenge der Speisepumpe (111) derart dimensioniert ist, dass externe Leckströme des mindestens einen Hydromotors (104a, 104b) und/oder der mindestens einen hydrostatischen Kreiskolbenmaschine (103) zur Vermeidung eines Unterdrucks im geschlossenen Hydraulikkreislauf (105) kompensierbar sind.

16. Windenergieanlage nach Anspruch 15,
**dadurch gekennzeichnet, dass**
die Speisepumpe (111) derart mechanisch mit der Windrotorwelle (102) gekoppelt ist, dass die Speisepumpe von dem Windrotor (101) antreibbar ist.

17. Windenergieanlage nach Anspruch 15 oder 16,
**dadurch gekennzeichnet, dass**
die Speisepumpe (111) als Zahnringpumpe mit einer Zahnringpumpenwelle (112) ausgebildet ist, wobei die Zahnringpumpenwelle (112) und die Welle (11) der mindestens einen hydrostatischen Kreiskolbenmaschine (103) eine gemeinsame geometrische Wellenachse (50) haben und insbesondere von einer gemeinsamen Welle gebildet werden.

18. Windenergieanlage nach Anspruch 15 oder 16,
**dadurch gekennzeichnet, dass**
die Speisepumpe (111) als eine volumenveränderbare oder nicht-volumenveränderbare zweite hydrostatische Kreiskolbenmaschine nach dem Orbitprinzip ausgebildet ist.

19. Windenergieanlage nach einem der Ansprüche 1 bis 18,
**dadurch gekennzeichnet, dass**
der mindestens eine Hydromotor von mindestens

• einem ersten Hydromotor (104a) und
• einem zweiten Hydromotor (104b)
gebildet wird, wobei in der mechanischen Kopplung zwischen dem mindestens einen zweiten Hydromotor (104b) und dem Generator (107) eine erste Kupplung (113) zum mechanischen Entkoppeln des mindestens einen zweiten Hydromotors (104b) von dem Generator (107) angeordnet ist.

20. Windenergieanlage nach Anspruch 19,
**dadurch gekennzeichnet, dass**
die Regeleinheit (108) derart ausgebildet ist und mit der ersten Kupplung (113) in derartiger Verstellverbindung steht, dass der zweite Hydromotor (104b) bei Unterschreiten eines Grenzwerts der Windenergie, der hydraulischen Energie und/oder der Rotationsenergie von dem Generator (107) mechanisch entkoppelt wird.

21. Windenergieanlage nach einem der Ansprüche 1 bis 20,
**dadurch gekennzeichnet, dass**
mindestens ein Hydromotor des mindestens einen Hydromotors als regelbarer Hydromotor (104a, 104b), insbesondere als ein regelbarer Axialkolbenmotor, ausgebildet ist, wobei

• das spezifische Schluckvolumen des mindestens einen regelbaren Hydromotors (104a, 104b) veränderbar ist,
• das Übersetzungsverhältnis zwischen der Windrotorwelle (102) und der Zweitwelle (106) durch Verändern des spezifischen Schluckvolumens des mindestens einen regelbaren Hydromotors (104a, 104b) veränderbar ist und die Regeleinheit (108) derart ausgebildet ist und mit dem mindestens einen regelbaren Hydromotor (104a, 104b) in derartiger Verstellverbindung steht, dass durch Verstellen des mindestens einen regelbaren Hydromotors (104a, 104b) die Drehzahl des Generators (107) bei schwankender Drehzahl des Windrotors (101) innerhalb eines Regelbereichs im Wesentlichen konstant ist.

FIG. 1

**FIG. 2**

**FIG. 3**

FIG. 4

FIG. 5

A - A

FIG. 6

B - B

FIG. 7

C - C

FIG. 8

FIG. 9

FIG. 10

**FIG. 11**

Europäisches
Patentamt

European
Patent Office

Office européen
des brevets

**EUROPÄISCHER RECHERCHENBERICHT**

Nummer der Anmeldung

EP 11 19 5239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2011/011682 A2 (PARKER HANNIFIN CORP [US]; KOVACH JOSEPH A [US]; KIMPEL RICHARD D [US]) 27. Januar 2011 (2011-01-27) * Seite 3, Zeile 17 - Zeile 19 * * Abbildung 2 * ----- | 1,14-16, 19,21 | INV. F03D9/00 F03D11/02 F03C2/22 F04B17/02 F16H39/00 |
| A,D | WO 2006/010471 A1 (EISENMANN SIEGFRIED A [DE]) 2. Februar 2006 (2006-02-02) * Abbildungen * ----- | 1 | |
| A | GB 2 480 683 A (ARTEMIS INTELLIGENT POWER LTD [GB]; MITSUBISHI HEAVY IND LTD [JP]) 30. November 2011 (2011-11-30) * Seite 3, Spalte 26 - Seite 4, Spalte 16 * * Abbildungen 1-3 * ----- | 1,13-15 | |
| A | WO 2011/067561 A1 (STATOIL ASA [NO]; SKAARE BJOERN [NO]; SVEEN DAGFINN [NO]; PRAMSTIG AAK) 9. Juni 2011 (2011-06-09) * Abbildungen 1,2 * ----- | 1,13-15 | RECHERCHIERTE SACHGEBIETE (IPC) |
| A | EP 2 154 368 A2 (GEN ELECTRIC [US]) 17. Februar 2010 (2010-02-17) * Absatz [0016] * * Abbildung 2 * ----- | 1,2,13, 14,21 | F03D F03C F04B F16H |

Der vorliegende Recherchenbericht wurde für alle Patentansprüche erstellt

| Recherchenort | Abschlußdatum der Recherche | Prüfer |
|---|---|---|
| Den Haag | 25. Mai 2012 | Angelucci, Stefano |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 11 19 5239

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-05-2012

| Im Recherchenbericht angeführtes Patentdokument | Datum der Veröffentlichung | Mitglied(er) der Patentfamilie | | Datum der Veröffentlichung |
|---|---|---|---|---|
| WO 2011011682 A2 | 27-01-2011 | KEINE | | |
| WO 2006010471 A1 | 02-02-2006 | CH | 701073 B1 | 30-11-2010 |
|  |  | EP | 1776525 A1 | 25-04-2007 |
|  |  | US | 2008003124 A1 | 03-01-2008 |
|  |  | WO | 2006010471 A1 | 02-02-2006 |
| GB 2480683 A | 30-11-2011 | AU | 2011226997 A1 | 15-12-2011 |
|  |  | GB | 2480683 A | 30-11-2011 |
|  |  | US | 2012117958 A1 | 17-05-2012 |
|  |  | WO | 2011147997 A2 | 01-12-2011 |
| WO 2011067561 A1 | 09-06-2011 | GB | 2476790 A | 13-07-2011 |
|  |  | WO | 2011067561 A1 | 09-06-2011 |
| EP 2154368 A2 | 17-02-2010 | CN | 101649814 A | 17-02-2010 |
|  |  | EP | 2154368 A2 | 17-02-2010 |
|  |  | US | 2010040470 A1 | 18-02-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009033272 B4

- WO 2006010471 A